# EUROPÄISCHE PATENTSCHRIFT

(11) **EP 1 773 089 B1**
(45) Veröffentlichungstag und Bekanntmachung des Hinweises auf die Patenterteilung: **16.05.2012**
(21) Anmeldenummer: 06020712.3
(22) Anmeldetag: 02.10.2006
(51) Int. Cl.: H04W 12/02

(54) **Verfahren, System und Vorrichtung zur Erzeugung und/oder Nutzung von Identitäten von Klienten in einem Kommunikationssystem**
Method, system and apparatus for generating and/or using identities of clients in a communication system
Méthode, système et dispositif de génération et/ou d'utilisation des identités des clients dans un système de communication

(30) Priorität: 05.10.2005 DE 102005047798
(43) Veröffentlichungstag der Anmeldung: 11.04.2007
(73) Patentinhaber: Vodafone Holding GmbH, 40213 Düsseldorf (DE)
(72) Erfinder: Stephan, Jungblut, 40212 Düsseldorf (DE); Bone, Nick, Newbury RG14 2PN (DE)
(74) Vertreter: Weisbrodt, Bernd

(56) Entgegenhaltungen:
- EP-A1- 1 246 491
- WO-A2-03/019856
- US-A1- 2003 087 629

## Beschreibung

Die vorliegende Erfindung betrifft ein Verfahren zur Erzeugung einer Identität von Klienten in einem ein verbindungsorientiertes Rechnernetz und ein zellulares Mobilfunknetz aufweisenden Kommunikationssystem. Ferner betrifft die vorliegende Erfindung die Nutzung einer erfindungsgemäßen Identität zur Authentisierung und/oder Authentifizierung eines Klienten. Gegenstand der Erfindung ist ferner eine Autorisierung eines Zugriffs eines Datenendgerätes auf Daten und/oder Dienste einer Datenendeinrichtung in einem Rechnernetz. Ferner betrifft die Erfindung ein aus einem verbindungsorientierten Rechnernetz mit Datenendeinrichtungen und einem zellularen Mobilfunknetz mit darin betreibbaren mobilen Endgeräten bestehendes Kommunikationssystem, wobei die Datenendeinrichtungen, die Einrichtungen des Mobilfunknetzes und/die mobilen Endgeräte zur Ausführung und/oder Nutzung eines erfindungsgemäßen Verfahrens ausgebildet sind.

Identitäten von Klienten, insbesondere Prozessen und/oder Benutzern von Endeinrichtungen, werden in Kommunikationsnetzwerken in zahlreichen Anwendungen zur Authentisierung, Authentifizierung und insbesondere Autorisierung verwendet. Authentisieren im Sinne der vorliegenden Erfindung ist das Nachweisen einer Identität eines Klienten. Authentifizierung beziehungsweise Authentifikation im Sinne der vorliegenden Erfindung ist ein Vorgang, bei welchem die Identität eines Klienten anhand eines bestimmten Merkmals überprüft wird. Dementsprechend sind bei einer Identitätsüberprüfung ein sich authentisierender Teilnehmer und ein diesen authentifizierender Teilnehmer beteiligt. Im Anschluss an eine erfolgreiche Identitätsüberprüfung kann dann eine Autorisierung eines Zugriffs des sich authentisierenden Teilnehmers auf Daten und/oder Dienste des Kommunikationssystems erfolgen.

Im Stand der Technik sind zahlreiche Verfahren und Systeme bekannt, die insbesondere zur Authentisierung, Authentifizierung und/oder Autorisierung von Klienten zum Einsatz kommen, wobei die jeweiligen Identitäten auf unterschiedlichste Art und Weise erzeugt beziehungsweise generiert werden.

Die Authentisierung und/oder Authentifizierung der Identität von Klienten, kann, je nach Ausgestaltung der Identität, der Authentisierung und/oder Authentifizierung auf fünf unterschiedliche Arten erfolgen. Dabei werden die Identitäten der Klienten hinsichtlich der diese definierenden Eigenschaften im Rahmen von Authentisierung beziehungsweise Authentifizierung überprüft. Unterschieden wird dabei nach Wissen, nach Besitz und/oder biometrischen Merkmalen. Eine Authentifizierung kann dabei auf fünf verschiedene Wege erfolgen, die miteinander kombinierbar sind:
1. Man hat etwas, beispielsweise einen Schlüssel, eine Karte oder dergleichen Kennung.
2. Man weiß etwas, beispielsweise ein Passwort.
3. Man ist etwas oder wer, beispielsweise Überprüfung biologischer Eigenschaften von Personen hinsichtlich Fingerabdrücken, Gesichts- und/oder Stimmencharakteristika.
4. Man ist an einem bestimmen Ort, beispielsweise eine bestimmte Funkzelle in einem zellularen Mobilfunknetz.
5. Man kann etwas, vorzugsweise etwas individuelles; beispielsweise die Unterschriftsleistung einer Person.

Bei Kombination von zwei dieser Möglichkeiten liegt eine sogenannte 2-Faktor-Authentifizierung vor, wie sie beispielsweise im Zusammenhang mit in zellularen Mobilfunknetzen betreibbaren mobilen Endgeräten nutzbaren SIM-Karten und der beziehungsweise den jeweils zugehörigen PIN beziehungsweise PiNs gegeben ist.

Derartige Verfahren und Systeme kommen beispielsweise im Bereich von zellularen Mobilfunknetzen umfangreich zum Einsatz, beispielsweise im Zusammenhang mit einem mobilen Endgerät einen Zugriff in beziehungsweise auf das Mobilfunknetz ermöglichenden Mobilfunkteilnehmer- Identifikations- Modulen, sogenannten SIM-Karten (SIM: Subscriber Identifikation Module), welche dazu in der Regel in in Mobilfunknetzen betreibbare mobile Endgeräte eingesetzt werden. Neben einer seitens entsprechender SIM-Karten gegebenen kartenspezifischen und in der Regel eindeutigen Kennung erfordert ein Zugriff auf beziehungsweise in das Mobilfunknetz zusätzlich die Eingabe einer persönlichen Identifikationsnummer beziehungsweise eines numerischen Zugangscodes, einer sogenannten PIN (PIN: Personal Identity Number) seitens eines die SIM-Karte nutzenden mobilen Endgerätes durch den Nutzer des mobilen Endgerätes. Im Zusammenhang mit verbindungsorientierten Rechnernetzen, beispielsweise dem Internet oder einem Intranet, sind ebenfalls zahlreiche einen Zugang zu dem Rechnernetz ermöglichende Authentisierungs-, Authentifizierung- und/oder Autorisierungsverfahren und/oder -systeme bekannt, wobei die von Klienten entsprechend genutzten Identitäten in unterschiedlichster Form und auf unterschiedlichste Art und Weise erzeugt sind beziehungsweise werden. Ein Zugriff eines menschlichen Nutzers auf Daten und/oder Dienste einer Datenendeinrichtung in einem Rechnernetz erfolgt von einer an das Rechnernetz angeschlossenen Datenendeinrichtung des Nutzers in der Regel unter Verwendung einer Identität, welche in der Regel aus einem Nutzernamen und einem dem Nutzernamen zugeordneten geheimen Passwort besteht. Ein Zugriff auf die Daten und/oder Dienste der diese bereitstellenden Datenendeinrichtung wird von dieser bei durch den Nutzer erfolgender Eingabe von Nutzername und geheimen Passwort ermöglicht. Dazu sind seitens der die Daten und/oder Dienste bereitstellenden Datenendeinrichtung der Nutzername und das dem Nutzername zugeordnete geheime Passwort gespeichert. Bei Zugriffsanforderung des Nutzers werden der von dem Nutzer eingegebene Nutzername und das von dem Nutzer eingegebene geheime Passwort seitens der die Daten und/oder Dienste bereitstellenden Datenendeinrichtung mit dem seitens der die Daten und/oder Dienste bereitstellenden Datenendeinrichtung erfassten Nutzername und Passwort verglichen und bei Übereinstimmung dem Nutzer beziehungsweise der dem Nutzer zugeordneten Datenendeinrichtung ein Zugriff auf die Daten und/oder Dienste ermöglicht.

Auch sind Kommunikationssysteme bekannt, bei denen Endeinrichtungen über ein verbindungsorientiertes Rechnernetz und/oder ein zellulares Mobilfunknetz miteinander gruppenweise verbunden sind. Derartige Kommunikationssysteme bilden für einzelne Gruppenmitglieder beziehungsweise deren Endgeräte innerhalb eines Unternehmens oder dergleichen Verbund ein virtuelles privates Netzwerk, ein sogenanntes VPN (VPN: Virtual Private Network). Das VPN basiert dabei in der Regel auf kryptographischen Methoden. Der über ein verbindungsorientiertes Rechnernetz, in der Regel das Internet, und/oder das Mobilfunknetz ermöglichte Zugriff einzelner Gruppenmitglieder auf das virtuelle private Netzwerk der Gruppe verwendet dabei ebenfalls Klientenidentitäten und Methoden zur Authentisierung, Authentifizierung und/oder Autorisierung. Die Verwaltung der Gruppe beziehungsweise der einzelnen Gruppenmitglieder erfolgt dabei seitens einer Datenendeinrichtung des Rechnernetzes, in der Regel durch einen sogenannten Access-Server des Unternehmens und/oder einenentsprechenden Access-Server beziehungsweise einer Übergangseinheit (Gateway) seitens des Mobilfunknetzes. Dabei erfolgt die Zuordnung von Gruppenmitgliedern zu der Gruppe und/oder einzelnen Gruppenmitgliedern beziehungsweise Gruppen in Kommunikationssystem für Kommunikationsanwendungen zur Verfügung stehenden Diensten seitens einer entsprechenden Verwaltungseinrichtung seitens des Kommunikationssystems.

Bei über ein verbindungsorientiertes Rechnernetz, insbesondere dem Internet, zugänglichen Daten und/oder Diensten einer Datenendeinrichtung sind unberechtigte und/oder missbräuchliche Zugriffe und/oder Nutzungen der Daten und/oder Dienste zu vermeiden. Dies gilt insbesondere bei einem Zugriff eines Mitarbeiters eines Unternehmens auf Daten und/oder Dienste einer Datenendeinrichtung eines Unternehmensnetzwerks, einem sogenannten Intranet, von einer außerhalb des Rechnernetzes des Unternehmens befindlichen Datenendeinrichtung über das Internet, beispielsweise bei einem Zugriff des Mitarbeiters des Unternehmens auf Datenendeinrichtungen im Unternehmen von seinem Wohnort oder dergleichen unternehmensexternen Orten aus. Um unberechtigte beziehungsweise missbräuchliche Zugriffe zu verhindern, sind im Stand der Technik bei der Erzeugung und/oder Nutzung von Identitäten insbesondere im Zusammenhang mit einer Authentisierung, Authentifizierung und/oder Autorisierung verschiedene kryptographische Verfahren und Methoden bekannt, die ein Verschlüsseln beziehungsweise Entschlüsseln von und/oder mit Identitäten umfassen. Dabei kommen insbesondere asymmetrische kryptographische Verfahren und/oder Systeme zum Einsatz, welche zur Erhöhung der Sicherheit von Verschlüsselungen beziehungsweise Entschlüsselungen in der Regel allbekannte und geheime Schlüssel nutzen, wobei die geheimen Schlüssel für den authentisierenden Teilnehmer und den authentifizierenden Teilnehmer einer entsprechenden Identitätsüberprüfung jeweils geheim beziehungsweise privat sind, im Gegensatz zu sogenannten symmetrischen kryptographischen Verfahren und/oder Systemen. Das sogenannte RSA-Verfahren (RSA: Rivest-Shamir-Adleman) stellt ein entsprechendes asymmetrisches kryptographisches Verfahren beziehungsweise System bereit, welches im Stand der Technik für verschiedenste Anwendungen im Internet Verwendung findet.

Nachteilig bei dem bisher im Stand der Technik bekannten Identitäten und/oder deren Nutzungen im Rahmen von Authentisierung, Authentifizierung und/oder Autorisierung sind in Abhängigkeit von der jeweiligen Ausgestaltung hinsichtlich Einrichtung, Wartung und/oder Handhabung aufwändig und kostenintensiv. Darüber hinaus sind die bisher bekannten Identitäten und deren Nutzungen im Rahmen von Authentisierung, Authentifizierung beziehungsweise Authentifikation und/oder Autorisierung hinsichtlich der Sicherheit von unberechtigten beziehungsweise missbräuchlichen Nutzungen verbesserungsbedürftig, insbesondere im Zusammenhang mit der Autorisierung eines Zugriffs auf Daten und/oder Dienste einer Datenendeinrichtung in einem virtuellen privaten Netzwerk (VPN).

Insbesondere bei klein- und mittelständischen Unternehmen, sogenannten KMUs ist der im Zusammenhang mit einem virtuellen privaten Netzwerk (VPN) verbundene Autorisierungsaufwand hinsichtlich eines Zugriffs auf Daten- und/oder Dienste einer Datenendeinrichtung des Unternehmens über ein verbindungsorientiertes Rechnernetz wie das Internet bisher aufgrund der erforderlichen System- und/oder Verwaltungsaufwendungen nicht beziehungsweise nicht unter wirtschaftlichen Gesichtspunkten und/oder mit vertretbarem Aufwand möglich.

Die Europäische Patentanmeldung EP 1 246 491 A1 offenbart ein Verfahren zum Bestellen neuer Verträge für Mobilfunkgeräte. Ein Benutzer eines Mobilfunkgeräts besitzt einen gültigen Vertrag mit einer entsprechenden Rufnummer im Mobilfunknetz. Die Rufnummer ist einem Identifikationsmodul des Mobilfunkgeräts zugeordnet. Der Benutzer bestellt über das Mobilfunkgerät bei einer Zentraleinheit einen neuen Vertrag. Nach getätigter Bestellung des Vertrags vervollständigt und/oder erweitert und/oder modifiziert der Benutzer an einem Terminal die Angaben zum Vertrag über einen Internetzugriff zur Zentraleinheit. Die eindeutige Identifikation des Benutzers wird mittels des Identifikations-moduls des Mobilfunkgeräts vor oder nach der Eingabe der Angaben durchgeführt. Falls die Identifikation mit dem Mobilfunkgerät vor der Eingabe der Daten erfolgt, kann dem Benutzer auf das Mobilfunkgerät ein URL (Uniform Resource Locator) z.B. mit einem Passwort via SMS übermittelt werden.

Der Erfindung liegt in Anbetracht dieses Standes der Technik die Aufgabe zugrunde, die Erzeugung und/oder Nutzung von Identitäten von Klienten in einem Kommunikationssystem zu verbessern, insbesondere hinsichtlich der System- und/oder Handhabungsaufwendungen, als auch hinsichtlich der Sicherheit vor unberechtigten beziehungsweise missbräuchlichen Nutzungen.

Zur technischen Lösung wird mit der vorliegenden Erfindung ein Verfahren zur Erzeugung einer Identität von Klienten in einem ein verbindungsorientiertes Rechnernetz und ein zellulares Mobilfunknetz aufweisenden Kommunikationssystem vorgeschlagen, wobei die Identität eines Klienten durch Kombination einer Kennung des Klienten in dem Rechnernetz mit einer Kennung des Klienten in dem Mobilfunknetz erzeugt wird wobei im Rahmen der Kombination die Kennung des Klienten in dem Rechnernetz mit der Kennung des Klienten in dem Mobilfunknetz verschlüsselt wird.

Der Erfindung liegt die Erkenntnis zugrunde, dass durch Kombination einer Kennung des Klienten in dem Rechnernetz mit einer Kennung des Klienten in dem Mobilfunknetz auf einfache und kostengünstige Art und Weise eine Identität des Klienten in dem Kommunikationssystem erzeugt werden kann, welche hinsichtlich des Verwaltungs- und Handhabungsaufwandes reduziert und darüber hinaus hinsichtlich der Sicherheit vor unberechtigter beziehungsweise missbräuchlicher Nutzung verbessert ist. Die erfindungsgemäße Kombination einer Kennung des Klienten in dem Rechnernetz mit einer Kennung des Klienten in dem Mobilfunknetz zur Erzeugung der Identität des Klienten in dem Kommunikationssystem macht sich vorteilhafterweise die seitens eines verbindungsorientierten Rechnernetzes und eines zellularen Mobilfunknetzes gegebenen Identitäten und deren Verfahren, Systeme und Methoden zur Authentisierung, Authentifizierung beziehungsweise Authentifikation und/oder Autorisierung zunutze, so dass der mit der erfindungsgemäßen Kombination gegebene beziehungsweise im Zusammenhang stehende Aufwand hinsichtlich Verwaltung und/oder Handhabung reduziert beziehungsweise reduzierbar ist. Durch die Kombination von seitens des verbindungsorientierten Rechnernetzes einerseits und seitens des zellularen Mobilfunknetzes andererseits gegebenen unterschiedlichen Kennungen des Klienten und deren Kombination zur Erzeugung einer Identität im Kommunikationssystem ist darüber hinaus auf einfache Art und Weise das Sicherheitsmaß der erzeugten Identität als auch deren Nutzungen im Rahmen von Authentisierung, Authentifizierung beziehungsweise Authentifikation und/oder Autorisierung gesteigert.

In einer vorteilhaften Ausgestaltung der Erfindung wird die Kennung des Klienten in dem Rechnernetz mit einem kryptographischen Algorithmus erzeugt, vorzugsweise seitens einer Datenendeinrichtung des Rechnernetzes, besonders bevorzugt seitens einer Datenendeinrichtung eines klein- und mittelständischen Unternehmens (KMU), welche an das verbindungsorientierte Rechnernetz angeschlossen ist. In einer vorteilhaften Ausgestaltung der Erfindung ist die Datenendeinrichtung des KMUs ein AAA-Server eines VPNs des KMUs. Eine weitere vorteilhafte Ausgestaltung der Erfindung sieht vor, dass die Kennung des Klienten in dem Rechnernetz unter Nutzung einer Basiskennung des Klienten im Rechnernetz und einer Zählreinrichtung erzeugt wird, wobei die Zählreinrichtung vorzugsweise einen kryptographischen Algorithmus nutzend ausgebildet ist und besonderes bevorzugt Bestandteil der Datenendeinrichtung ist. Durch die erfindungsgemäße Verwendung einer Zählreinrichtung wird vorteilhafterweise eine Synchronisation der Kennung des Klienten in dem Rechnernetz und damit seitens des Kommunikationssystems realisiert, wodurch sich die Sicherheit der Identität und/oder deren Nutzung weiter steigern lässt. So kann beispielsweise eine im Rahmen der Nutzung unberechtigt beziehungsweise missbräuchlich abgefangene oder abgehörte Kennung vorteilhafterweise nicht noch einmal, also dann unberechtigt beziehungsweise missbräuchlich, genutzt werden.

In einer weiteren vorteilhaften Ausgestaltung der Erfindung wird die Kennung des Klienten in dem Mobilfunknetz mit einem kryptographischen Algorithmus erzeugt, vorzugsweise seitens eines in dem Mobilfunknetz betreibbaren mobilen Endgerätes des Klienten. Eine weitere Ausgestaltung der Erfindung sieht vor, dass die Kennung des Klienten in dem Mobilfunknetz unter Nutzung einer Basiskennung des Klienten im Mobilfunknetz und einer Zähleinrichtung erzeugt wird, wobei die Zählreinrichtung vorzugsweise einen kryptographischen Algorithmus nutzend ausgebildet ist und besonders bevorzugt Bestandteil des mobilen Endgerätes und/oder eines von dem mobilen Endgerät genutzten Mobilfunkteilnehmer-Identifikations-Moduls, einer sogenannten SIM (SIM: Subscriber Identifikation Modul) ist. Eine bevorzugte Ausgestaltung der Erfindung sieht vor, dass die Basiskennung des Klienten im Mobilfunknetz das im Mobilfunknetz betreibbare mobile Endgerät identifizierende Daten und/oder dem Nutzer des mobilen Endgerätes im Mobilfunknetz identifizierende Daten beinhaltet, wobei als das mobile Endgerät identifizierende Daten vorzugsweise die Gerätekennung, die sogenannte IMEI (IMEI: International Mobile Equipment Identity), und die dem Nutzer des mobilen Endgerätes im Mobilfunknetz identifizierenden Daten zumindest die dem Nutzer von einem Mobilfunknetzbetreiber zugeordnete netzspezifische Ruf-Nummer, die sogenannte MSISDN (MSISDN: Mobile Station Subscriber ISDN Number; ISDN: Integrated Services Digital Network) und/oder zumindest die Mobilfunkteilnehmerkennnung, die sogenannte IMSI (IMSI: International Mobile Subscriber Identifikation) beinhalten. Eine besonders vorteilhafte Ausgestaltung der Erfindung sieht vor, dass die Kennung des Klienten in dem Mobilfunknetz mittels einer seitens des Mobilfunkteilnehmer-Identifikations-Moduls (SIM (SIM: Subscriber ldentity Module) ausführbaren Anwendung, einer sogenannten SAT-Anwendung (SAT: SIM Application Toolkit), erzeugt wird.

In einer besonders bevorzugten Ausgestaltung der Erfindung werden die Kennungen unabhängig voneinander erzeugt. Durch diese Maßnahme ist das Maß der Sicherheit der Identität und insbesondere deren Nutzungen im Rahmen von Authentisierung, Authentifikation und/oder Autorisierung weiter steigerbar, insbesondere da für eine unberechtigte beziehungsweise missbräuchliche Nutzung sowohl die Kennung des Klienten in dem Rechnernetz als auch die unabhängig von dieser erzeugte Kennung des Klienten im Mobilfunknetz bestimmt beziehungsweise erfasst werden müssten.

Eine weitere besonders vorteilhafte Ausgestaltung der Erfindung sieht vor, dass die Kennung des Klienten in dem Rechnernetz mit einem aus der Kennung des Klienten in dem Mobilfunknetz bestimmbaren Schlüssel, vorzugsweise einem symmetrischen Schlüssel, verschlüsselt wird. Dadurch ist das Maß der Sicherheit weiter steigerbar. Eine weitere vorteilhafte Ausgestaltung der Erfindung sieht vor, dass die Kennung des Klienten in dem Rechnernetz mit einem aus der Kennung des Klienten in dem Mobilfunknetz und dem Zählerstand einer synchronisierten Zähleinrichtung des Mobilfunknetzes bestimmbaren Schlüssel, vorzugsweise einem symmetrischen Schlüssel, verschlüsselt wird. Durch die Berücksichtigung des Zählerstandes einer synchronisierten Zähleinrichtung des Mobilfunknetzes zusätzlich zu der Klienten in dem Mobilfunknetz und deren Verwendung zur Verschlüsselung der Kennung des Klienten in dem Rechnernetz ist eine weitere Steigerung der Sicherheit der erfindungsgemäß kombinativ zu erzeugenden Identität und deren Nutzung weiter steigerbar. Vorteilhafterweise wird die Verschlüsselung automatisch seitens einer Datenendeinrichtung des Rechnernetzes vorgenommen, besonders bevorzugt seitens einer Datenendeinrichtung des Rechnernetzes, welche Daten und/oder Dienste für ein Zugriff über das Rechnernetz zur Verfügung stellt beziehungsweise einer Datenendeinrichtung, welche mit einer entsprechende Daten und/oder Dienste zur Verfügung stellenden Datenendeinrichtung verbunden beziehungsweise verbindbar ist.

In einer weiteren Ausgestaltung der Erfindung ist der Klient ein Prozess und/oder ein Benutzer einer Datenendeinrichtung in dem Rechnernetz und/oder ein Prozess und/oder ein Benutzer eines in dem Mobilfunknetz betreibbaren mobilen Endgerätes.

Eine vorteilhafte Ausgestaltung der Erfindung sieht vor, dass die erfindungsgemäße Identität zur Authentisierung eines Klienten genutzt wird. Vorteilhafterweise wird dabei die Identität von einer Datenendeinrichtung des Rechnernetzes über eine Kommunikationsverbindung des Rechnernetzes von dem Klienten angefordert und von dem Klienten über die Kommunikationsverbindung an die Datenendeinrichtung des Rechnernetzes übertragen. Eine weiteren Ausgestaltung der Erfindung sieht vor, dass die Kennung des Klienten im Mobilfunknetz von einer Datenendeinrichtung des Rechnernetzes über die Kommunikationsverbindung des Rechnernetzes von dem Klienten angefordert wird. Vorteilhafterweise wird die Anforderung nach der Kennung des Klienten im Mobilfunknetz über eine Kommunikationsverbindung des Mobilfunknetzes an ein in dem Mobilfunknetz betreibbares mobiles Endgerät des Klienten gerichtet, seitens des mobilen Endgerätes des Klienten die Kennung des Klienten in dem Mobilfunknetz erzeugt und die erzeugte Kennung des Klienten in dem Mobilfunknetz von dem mobilen Endgerätes des Klienten über eine und/oder unter Nutzung einer Kommunikationsverbindung des Mobilfunknetzes an die Datenendeinrichtung des Rechnernetzes übertragen. Eine besonders bevorzugte Ausgestaltung der Erfindung sieht vor, dass die Kommunikationsverbindung des Mobilfunknetzes eine eine Verbindung in das Rechnernetz ermöglichende Kommunikationsverbindung ist, vorzugsweise eine Protokolle gemäß der WAP-Spezifikation (WAP: Wireless Application Protocol) nutzende Kommunikationsverbindung ist.

Vorteilhafterweise wird seitens der Datenendeinrichtung des Rechnernetzes die Kennung des Klienten im Rechnernetz erzeugt und zur Erzeugung der Identität des Klienten mit der Kennung im Mobilfunknetz verschlüsselt. Die erfindungsgemäß zur Authentisierung nutzbare Identität des Klienten im Kommunikationssystem wird dabei hinsichtlich der Sicherheit weiter verbessert, insbesondere da die zum Verschlüsseln erforderliche Kennung des Klienten im Mobilfunknetz zunächst angefordert und vorzugsweise nur auf Anforderung seitens der Datenendeinrichtung des Rechnernetzes zur Verfügung steht und genutzt wird.

Vorteilhafterweise wird die erfindungsgemäße Identität zur Authentisierung beziehungsweise Authentifikation eines Klienten im Kommunikationssystem genutzt, wobei die Nutzung sowohl zur Authentifizierung im Mobilfunknetz als auch zur Authentifizierung im Rechnernetz nutzbar ist. Eine erfindungsgemäße Identität kann so vorteilhafterweise zur Authentifikation von über das Mobilfunknetz und/oder das Rechnernetz mittels entsprechenden Endgeräten erfolgenden Einkäufen von Waren und/oder Dienstleistungen oder dergleichen Anwendungen des elektronischen Handelns, dem sogenannten E-Commerce mit einem hohen Maß an Sicherheit genutzt werden. Insgesamt lässt sich dadurch das Vertrauen in einen entsprechenden Handel zwischen den Handelspartnern steigern.

In einer bevorzugten Ausgestaltung der Erfindung erfolgt die erfindungsgemäße Authentifizierung seitens einer Datenendeinrichtung des Rechnernetzes. Vorteilhafterweise erfolgt dabei im Rahmen der Authentifizierung eine Zerlegung der Identität in die Kennung des Klienten im Rechnernetz und in die Kennung des Klienten im Mobilfunknetz. Vorteilhafterweise wird die im Rahmen der Zerlegung der Identität bestimmte beziehungsweise gewonnene Kennung des Klienten im Rechnernetz authentifiziert, vorzugsweise durch wenigstens einen Vergleich seitens einer Datenendeinrichtung des Rechnernetzes.

Gemäß einer weiteren besonders bevorzugten Ausgestaltung der Erfindung sieht das erfindungsgemäße Verfahren zur Autorisierung eines Zugriffs eines Datenendgerätes auf Daten und/oder Diensten einer Datenendeinrichtung in einem Rechnernetz genutzt.

Gegenstand der vorliegenden Erfindung ist ferner ein Kommunikationssystem bestehend aus einem verbindungsorientiertem Rechnernetz mit Datenendeinrichtung und einem zellularen Mobilfunknetz, vorzugsweise gemäß dem GSM- und/oder UMTS-Funknetzstandard, mit darin betreibbaren mobilen Endgeräten, wobei die Datenendeinrichtungen, die Einrichtungen des Mobilfunknetzes, insbesondere die für die Verwaltung, den Aufbau und/oder die Aufrechterhaltung einer Kommunikationsverbindung im Mobilfunknetz beteiligten Einrichtungen des Mobilfunknetzes, und/oder die mobilen Endgeräte zur Ausführung und/oder Nutzung eines erfindungsgemäßen Verfahrens ausgebildet sind.

Gegenstand der Erfindung ist ferner ein mobiles Endgerät zur Nutzung in einem zellularen Mobilfunknetz mit einem Mobilfunkteilnehmer-Identifikations-Modul (SIM) sowie ein Mobilfunkteilnehmer-Identifikations-Modul (SIM) zur Nutzung mit einem mobilen Endgerät zum Betrieb in einem zellularen Mobilfunknetz, welche zur Ausführung eines erfindungsgemäßen Verfahrens in einem erfindungsgemäßen Kommunikationssystem ausgebildet sind. In einer besonders vorteilhaften Ausgestaltung der Erfindung ist das Verfahren als Anwendungsprogramm seitens des Mobilfunkteilnehmer-Identifikations-Moduls (SIM) gespeichert und/oder seitens desselben ausführbar. Das in dem Mobilfunknetz betreibbare mobile Endgerät ist vorteilhafterweise ein Mobilfunktelefon und/oder eine im Zusammenhang mit einer Datenendeinrichtung nutzbare, im Mobilfunknetz betreibbare Steckkarte, vorzugsweise im PCMCIA-Format, oder ein im Mobilfunknetz betreibbares Dongle, vorzugsweise mit USB-Anschluss zum Verbinden mit einer Datenendeinrichtung.

Weitere Einzelheiten, Merkmale und Vorteile der Erfindung werden nachfolgend anhand der in den Figuren der Zeichnung dargestellten Ausführungsbeispiele der Erfindung näher erläutert. Dabei zeigen:
- Fig. 1: in einer schematischen Prinzipdarstellung zwei mögliche Nutzungen einer erfindungsgemäßen Identität zur Autorisierung eines Zugriffs eines Klienten auf ein Intranet eines Unternehmens;
- Fig. 2: in einer schematischen Darstellung Prinzipdarstellung ein erfindungsgemäßes Kommunikationssystem zur Nutzung einer erfindungemäßen Identität für eine Zugriffsautorisierung auf Daten und/oder Dienste einer Datenendeinrichtung in einem Rechnernetz;
- Fig. 3: in einer weiteren schematischen Prinzipdarstellung das erfindungsgemäße Kommunikationssystem gemäß Fig. 2;
- Fig. 4: in einer schematischen Prinzipdarstellung ein Ausführungsbeispiel der im Rahmen einer erfindungsgemäßen Autorisierung gegebenen Authentisierungs- und Authentifizierungsabläufe;
- Fig. 5: in einer schematischen Prinzipdarstellung ein weiteres Ausführungsbeispiel der im Rahmen einer erfindungsgemäßen Autorisierung gegebenen Authentisierungs- und Authentifizierungsabläufe;
- Fig. 6: in einer schematischen Blockdiagrammdarstellung ein erfindungsgemäßes Kommunikationssystem;
- Fig. 7: in einer schematischen Darstellung ein Ablaufdiagramm eines Ausführungsbeispiels einer erfindungsgemäßen Zugriffsautorisierung und
- Fig. 8: in einer schematischen Darstellung ein Ablaufdiagramm eines weiteren Ausführungsbeispiels einer erfindungsgemäßen Zugriffsautorisierung.

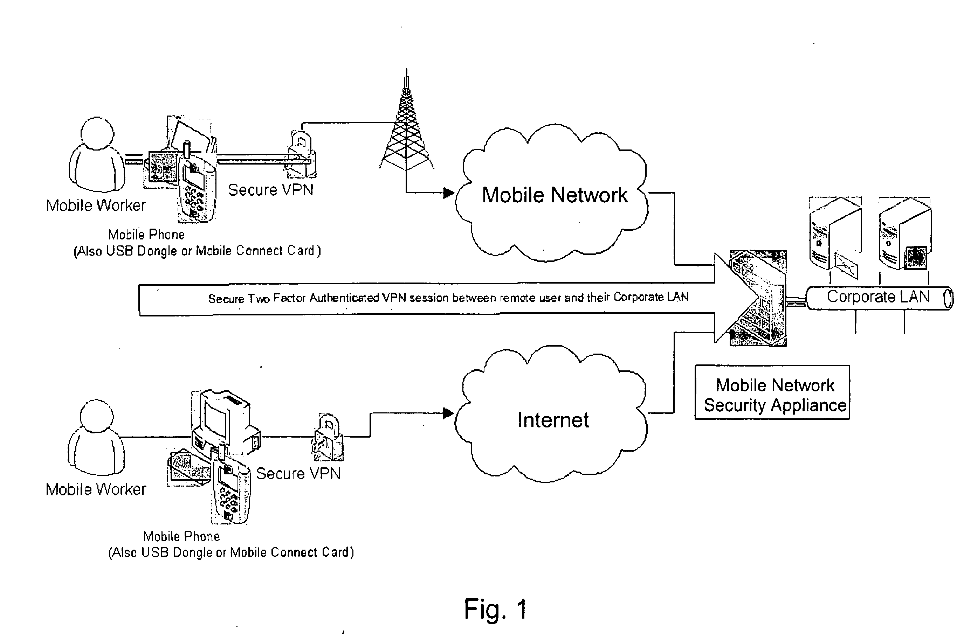

In Fig. 1 ist in einer schematischen Darstellung der Zugriff eines Klienten (Mobile Worker) auf ein virtuelles privates Netzwerk (VPN), vorliegend in Form eines verschiedene Datenendeinrichtungen aufweisenden Rechnernetzes eines Unternehmens in Form eines sogenannten Intranet (Corporate-LAN). Der Klient (Mobile Worker) ist dabei vorliegend Angestellter des Unternehmens und erledigt beispielsweise Arbeiten für das Unternehmen von seinem Wohnort oder dergleichen unternehmensfernen Orten aus. Dazu nutzt der Klient (Mobile Worker) vorliegend für einen mobilen Einsatz entsprechend den mit Fig. 1 oben dargestellten Klient (Mobile Worker) eine mobile beziehungsweise portable Datenendeinrichtung, vorliegend in Form eines Notebooks und ein in einem Mobilfunknetz betreibbares mobiles Endgerät (Mobile Phone). Der in Fig. 1 unten dargestellte Klient (Mobile Worker) nutzt eine an seinem Wohnort an ein sogenanntes Festnetz angeschlossene Datenendeinrichtung, vorliegend in Form eines sogenannten PCs, und sein in einem Mobilfunknetz betreibbares mobiles Endgerät (Mobile Phone).

Der in Fig. 1 oben dargestellte Klient (Mobile Worker) greift dabei über das Mobilfunknetz auf das Intranet des Unternehmens (Corporate LAN) zu. Das Unternehmensnetzwerk/Intranet (Corporate LAN) ist dabei vorteilhafterweise über ein sogenanntes "Site to Site VPN" über das Internet an das Mobilfunknetz eines Mobilfunkbetreibers angeschlossen, vorzugsweise über die in Fig. 1 symbolisch dargestellte Security Appliance (Mobile Network Security Appliance). Der in Fig. 1 unten dargestellte Klient (Mobile Worker) greift über das Internet als verbindungsorientiertes Rechnernetz auf das Unternehmensnetzwerk/Intranet des Unternehmens (Corporate LAN) zu.

Die Zugriffe auf das Unternehmensnetzwerk (Corporate LAN) über das Mobilfunknetz (Mobile Network) beziehungsweise das verbindungsorientierte Rechnernetz (Internet) erfolgen dabei unter Nutzung einer durch Kombination einer Kennung des Klienten in dem Rechnernetz mit einer Kennung des Klienten in dem Mobilfunknetz erzeugten Identität, welche durch ein in Fig. 1 symbolisch dargestelltes Authentifizierungssystem (Mobile Network Security Appliance) erfolgt. Das Authentifizierungssystem ist dabei vorliegend seitens des Mobilfunknetzes gegeben und stellt eine gesicherte 2-Faktor-Authentifikation für Verbindungen zwischen den jeweiligen Klienten (Mobile Worker) und dem Unternehmensnetzwerk (Corporate LAN) zur Verfügung. Dabei wird ein gesicherter Zugriff der Klienten (Mobile Worker) auf das Unternehmensnetzwerk (Corporate LAN) bereitgestellt (Secure VPN). Die Security Appliance wird dabei vorteilhafterweise als Ein-Box-Modell, bei dem sämtliche erforderliche Komponenten und Anschlüsse in einem Gehäuse untergebracht sind, oder als Zwei-Box-Modell, bei dem die erforderlichen Komponenten und Anschlüsse in zwei separaten Gehäusen untergebracht sind, bereitgestellt. Dadurch ist insbesondere ein vereinfachtes Anschließen einer entsprechenden Security Appliance an ein Unternehmensnetzwerk oder dergleichen Intranet ermöglicht, insbesondere für Endanwender. Darüber hinaus ist so eine vereinfachte, umfangreichere, intelligente und individuell zusammenstellbare Kombination von Sicherheitsmerkmalen und/oder -einrichtungen wie Firewall, VPN, Anti-Virus, Anti-Spam oder dergleichen Sicherheitsanwendungen der Security Appliance mit sicherer Authentifizierung gebündelt anbietbar und/oder nutzbar.

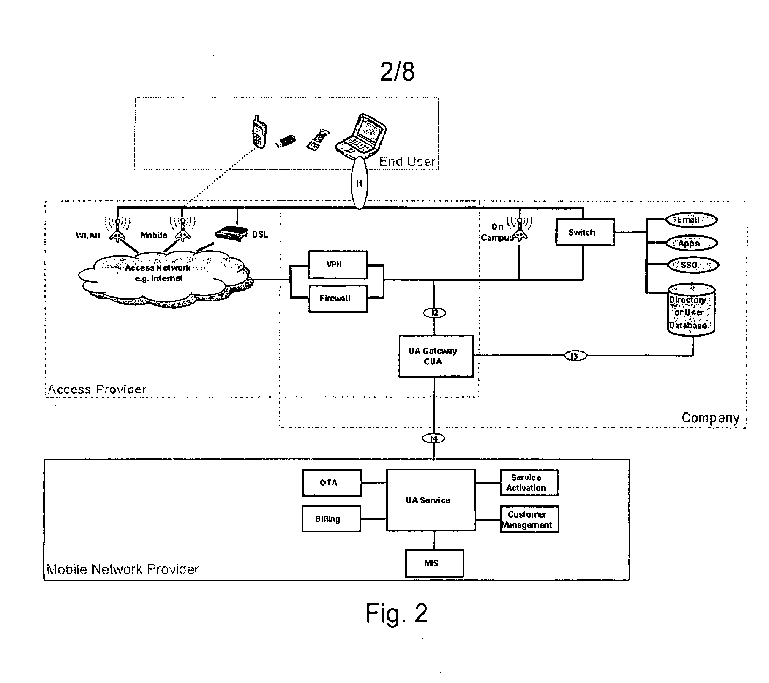

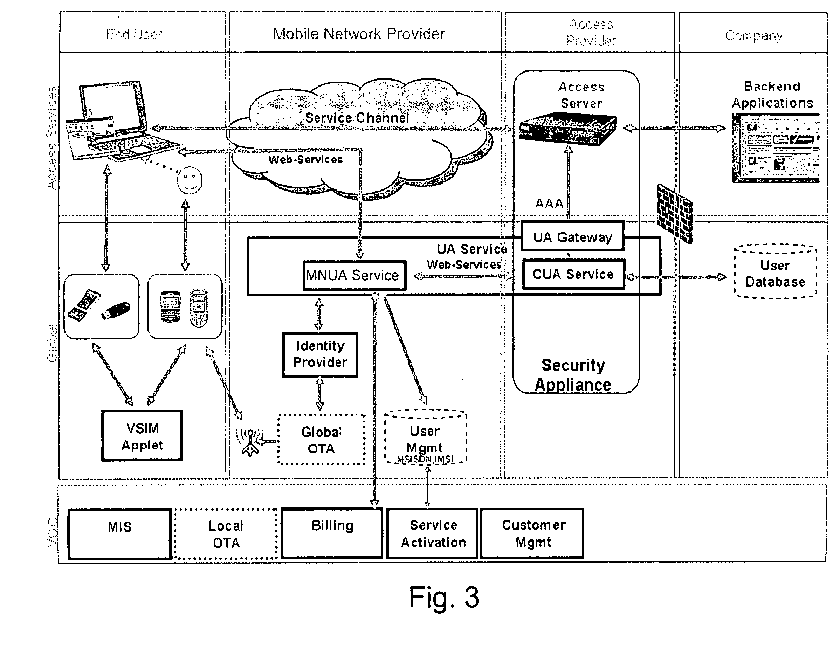

Fig. 2 zeigt in einer detailreicheren Darstellung die einzelnen im Rahmen einer Authentifizierung beziehungsweise Authentifikation eines Zugriffs eines Klienten (Enduser) auf das Netzwerk eines Unternehmens (Company). Der Klient (Enduser) beziehungsweise dessen Datenendgerät ist über eine geeignete Kommunikationsverbindung mit dem verbindungsorientierten Rechnernetz verbunden. Der Zugang zu dem verbindungsorientierten Rechnernetz erfolgt dabei über einen sogenannten Zugangsbereitsteller (Access-Provider), über eine drahtlose und/oder drahtgebundene Verbindung zwischen dem beziehungsweise den jeweiligen Datenendgeräten des Klienten (Enduser), vorliegend beispielsweise über ein in ein Mobilfunknetz betreibbares mobiles Endgerät, eine sogenannte WLAN-Verbindung oder eine DSL-Verbindung. Über das Rechnernetz (Internet) ist der Klient (Enduser) dann mit entsprechenden Datenendeinrichtungen des Unternehmens (Company) verbindbar. Der Zugriff auf die Datenendeinrichtungen des Unternehmens (Company) erfolgt dabei über eine die Authentifizierung vornehmende Übergangseinheit des Unternehmens UA (UA: User Authentication Gateway). Das UA-Gateway ist dabei vorliegend seitens des Unternehmens (Company) angeordnet und über das Internet mit dem Access-Provider für den Zugang des Klienten (Endusers) zum Rechnernetz (Internet), mit einer seitens des Unternehmensnetzwerks bevorrateten Datenbank mit Einträgen von Klienten (Directory of User Database) und mit Datenendeinrichtungen eines Mobilfunknetzbetreibers (Mobile Network Provider) verbunden. Seitens des Mobilfunknetzbetreibers (Mobile Network Provider) sind dabei Einrichtungen vorgesehen, die entsprechende den Klienten authentifizierende Dienste (UA-Service) bereitstellen, welche insbesondere die Kennung des Klienten (Enduser) in dem Mobilfunknetz betreffen. Der in Fig. 2 dargestellte Zugriff eines Klienten (Enduser) auf ein Unternehmensnetzwerk (Company) entspricht dabei dem in Fig. 1 im unteren Bereich dargestellten Zugriff eines Klienten (Mobile Worker) auf ein Unternehmensnetzwerk (Corporate LAN). Bei dem in Fig. 3 ausgeführten Ausführungsbeispiel eines Zugriffs eines Klienten (Enduser) auf das Intranet eines Unternehmens (Company) erfolgt der Zugriff des Klienten (Enduser) auf das Unternehmensnetzwerk über einen mobilen Zugang des Klienten (Enduser) über ein Mobilfunknetz in das verbindungsorientierte Rechnernetz (Internet). Über den Mobilfunknetzzugang eines Mobilfunknetzbetreibers (Mobile Network Provider) wird über entsprechende Kommunikationsdienste (Service Channel, Webservices) der mobile Zugriff des Klienten (Endusers) über einen entsprechenden Access-Provider mittels geeigneter Datenendeinrichtungen, vorliegend einem Access-Server (AAA-Server) mit einem gesicherten Zugang ermöglicht. Der Zugriff des Klienten (Enduser) gemäß Fig. 3 entspricht dabei dem in Fig. 1 im oberen Bereich dargestellten Zugriff eines Klienten (Mobile Worker) auf ein Unternehmensnetzwerk (Corporate LAN).

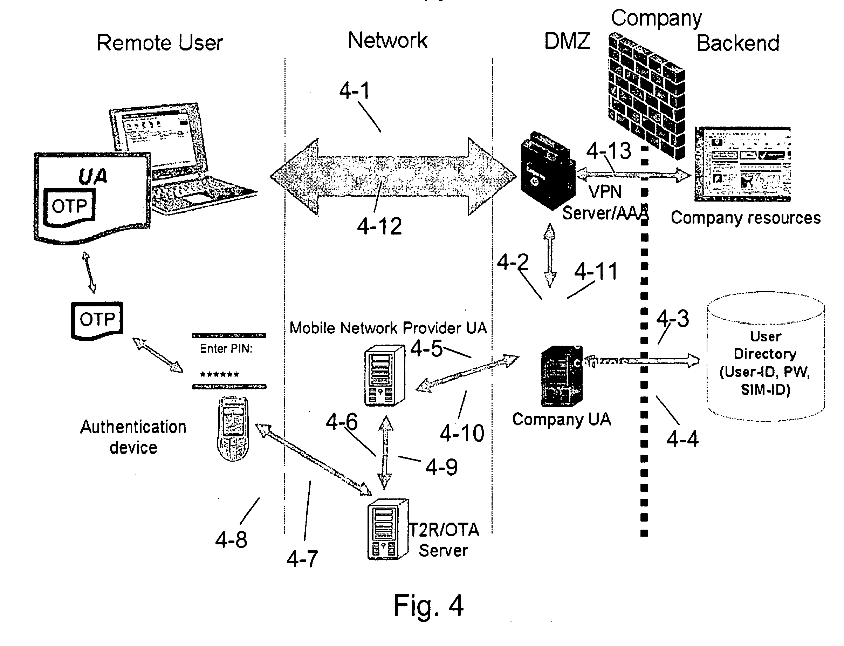

Fig. 4 zeigt den Zugriff eines Nutzers (Remote User) auf eine Daten und/oder Dienste (Company Resources) bereitstellenden Datenendeinrichtung eines Unternehmens (Company) über ein verbindungsorientiertes Rechnernetz (Network). Der Nutzer (Remote User) nutzt dazu eine Datenendeinrichtung, vorliegend in Form eines Notebooks und zur Authentifizierung seines Zugriffs ein in einem Mobilfunknetz (Mobile Network Provider) betreibbares mobiles Endgerät, vorliegend in Form eines Mobilfunktelefons. Das Unternehmen (Company) weist eine an das verbindungsorientierte Rechnernetz anschließbare Datenendeinrichtung (VPN Server/AAA) auf. Weiter weist das Unternehmen (Company) eine mit dem Mobilfunknetz (Mobile Network) verbindbare Datenendeinrichtung auf. Die beiden Datenendeinrichtungen (VPN Server/AAA; Company UA) sind vorliegend miteinander verbunden. Über die mit dem Mobilfunknetz verbindbare Datenendeinrichtung (Company UA) erfolgt unternehmensseitig ein Zugriff auf die Daten und/oder Dienste (Company Resources) im unternehmensinternen Intranet.

Erfindungsgemäß erfolgt die Authentifizierung des Nutzers (Remote User) nach dem Ausführungsbeispiel gemäß Fig. 4 vorteilhafterweise vor dem eigentlichen Zugriff desselben auf das Unternehmensnetzwerk (Company resources). Vorteilhafterweise werden so sogenannte Timeouts am VPN/AAA-Server vermieden. Ferner ist so eine geschlossene Schleife (Loop) von Client über Mobilfunknetzbetreiber und Unternehmen (Corporate/Company) gegeben, welche die Sicherheit des Zugriffs weiter erhöht, insbesondere da der Nutzer (Remote User) an seinem Endgerät (Rechner/Notebook) seine über die im Mobilfunknetz betreibbare mobile Endgerät/Mobilfunktelefon (Authentication Device) erzeugte Kennung der Identität (OTP) in die seitens des Endgerätes (Rechner/Notebook) ausgeführte beziehungsweise laufende den Zugriff ermöglichende Anwendung, einem sogenannten Access Client (UA Client), eingeben muss.

Zunächst startet der Nutzer (Remote User) über seine im verbindungsorientierten Rechnernetz betreibbare Datenendeinrichtung (Notebook) eine über das verbindungsorientierte Rechnernetz (Network) gerichtete Anfrage an die Datenendeinrichtung (VPN Server/AAA) des Unternehmens (Company), wie in Fig. 4 symbolisch durch den mit 4-1 gekennzeichneten Pfeil dargestellt. Dazu wird seitens der Datenendeinrichtung (Notebook) des Nutzers ein Anwendungsprogramm ausgeführt, vorliegend ein sogenannter UA Client, wie in Fig. 4 dargestellt. Der UA Client verschickt dabei über eine bestehende unverschlüsselte Internet-Verbindung eine Zugriffsanfrage (Identity Request) an eine seitens der Datenendeinrichtung (VPN Server/AAA) des Unternehmens (Company) ausgeführte Anwendung, vorliegend ein sogenannte Company UA, in Fig. 4 mit den Bezugszeichen 4-1 und 4-2 gekennzeichnet.

Die Zugriffsanfrage (4-1) des Nutzers (Remote User) wird von der Datenendeinrichtung (VPN Server/AAA) über den in Fig. 4 mit 4-2 gekennzeichneten Pfeil an die die Authentifizierung des Nutzers übernehmende Datenendeinrichtung beziehungsweise eines seitens einer solchen ausgeführten Anwendungsprogramms des Unternehmens (Company UA) zur Identitätsüberprüfung weitergeleitet. Dabei wird die Kennung (Rechnernetzkennung) der Datenendeinrichtung (Notebook) des Nutzers (Remote User) im Rechnernetz (Network), vorliegend dem Internet, an die Company UA übergeben beziehungsweise übertragen.

Die Company UA bestimmt daraufhin die Mobilfunkkennung des Nutzers (Remote User) aus der Rechnernetzkennung und startet eine Authentifizierungsanfrage, einen sogenannten Request zur Authentifizierung, wobei vom im Mobilfunknetz betreibbaren Datenendgerät des Nutzers, vorliegend von der von diesem genutzten SIM, zu signierende und darzustellende Daten übergeben werden.

Im Rahmen dieser Authentifizierungsanfrage greift die Datenendeinrichtung (Company UA) auf eine Nutzeridentitäten verwaltende Datenbank (User Directory (User-ID, PW, SIM-ID)) zu, wie in Fig. 4 anhand des mit 4-3 gekennzeichneten Pfeils dargestellt.

Die Datenbank (User Directory) liefert daraufhin an die Datenendeinrichtung (Company UA) eine entsprechende Kennung des Nutzers (Remote User) im Mobilfunknetz zurück, wie in Fig. 4 anhand des mit 4-4 gekennzeichneten Pfeils dargestellt.

Die Datenendeinrichtung (Company UA) des Unternehmens (Company) nutzt die aus der Datenbank (User Directory) erhaltenen Informationen und kontaktiert daraufhin eine Datenendeinrichtung des Mobilfunknetzbetreibers (Mobile Network Provider UA), wie anhand des in Fig. 4 mit 4-5 gekennzeichnetem Pfeils dargestellt.

Die von der Datenendeinrichtung des Mobilfunknetzbetreibers (Mobile Network Provider) im Rahmen des mit 4-5 gekennzeichneten Pfeils erhaltene Kennung wird seitens des Mobilfunknetzbetreibers einer zur Überprüfung der Kennung ausgebildeten beziehungsweise eingerichteten Datenendeinrichtung (T2R/OTA Server) übergeben, wie in Fig. 4 anhand des mit 4-6 gekennzeichneten Pfeils symbolisch dargestellt.

Die Authentifizierung des Nutzers (Remote User) erfolgt dann seitens des Mobilfunknetzes. Die Datenendeinrichtung (T2R/OTA Server) sendet zur Authentifizierung des Nutzers (Remote User) eine entsprechende Authentifizierungsanfrage an ein im Mobilfunknetz betreibbares mobiles Endgerät (Authentication device) des Nutzers (Remote User) wie in Fig. 4 anhand des mit 4-7 dargestellten Pfeils ersichtlich. Im Rahmen der Authentifikationsanfrage (4-7) wird der Nutzer (Remote User) aufgefordert, eine entsprechende PIN seitens des mobilen Endgerätes (Authentication device) einzugeben.

Mit der von dem Nutzer (Remote User) eingegebenen PIN wird daraufhin seitens des mobilen Endgerätes (Authentication device) ein Passwort (OTP) erzeugt und über das Mobilfunknetz über die in Fig. 4 mit 4-8 gekennzeichnete Verbindung an die Datenendeinrichtung (T2R/OTA Server) des Mobilfunknetzes übertragen, von der Datenendeinrichtung (T2R/OTA Server) über die in Fig. 4 mit 4-9 gekennzeichnete Verbindung der Datenendeinrichtung (Mobile Network Provider UA) übermittelt und von dieser über die in Fig. 4 mit 4-10 gekennzeichnete Verbindung der Datenendeinrichtung (Company UA) des Unternehmens (Company) übertragen.

Ferner wird das seitens des mobilen Endgerätes (Authentication device) mit der PIN erzeugte Passwort (OTP) seitens des mobilen Endgerätes (Authentication device) angezeigt und von dem Nutzer (Remote User) seitens des Datenendgerätes (Notebook) seitens der von diesem ausgeführten Anwendung (UA Client) eingegeben und an den seitens der Datenendeinrichtung des Unternehmens (VPN Server/AAA) und einer seitens desselben ausgeführten Anwendung (VPN Client) übertragen.

Das Passwort wird dann der Datenendeinrichtung (Company UA) im Rahmen des Verbindungsaufbaus beziehungsweise einer weiteren Zugriffsanfrage vorgelegt und sofern sich die entsprechende Übertragung noch innerhalb eines bestimmten Zeitintervalls (Zeitfenster) befindet der Zugriff validiert.

Daraufhin erfolgt seitens Datenendeinrichtung (Company UA) ein Vergleich der von dem Nutzer (Remote User) seitens des Datenendgerätes (Notebook) im Rahmen des UA Client eingegebenen Passworts (OTP) mit dem entsprechenden über das Mobilfunknetz an Datenendeinrichtung (Company UA) übertragenen Passwort (OTP). Bei Übereinstimmung der Passwörter (OTPs) ist eine positive Authentifikation gegeben und wird seitens der Datenendeinrichtung (Company UA) über den in Fig. 4 mit 4-11 gekennzeichneten Pfeil ein entsprechendes Ergebnis der mit dem verbindungsorientierten Rechnernetz (Network) verbunden Datenendeinrichtung (VPN Server/AAA) des Unternehmens (Company) eine Information übertragen, woraufhin der Nutzer von der Datenendeinrichtung (VPN Server/AAA) Zugriff auf die seitens des Unternehmensnetzwerks bereitgestellten Daten und/oder Dienste (Company resources) erhält. Da die Mobilfunkidentität bereits vorher über das mobile Endgerät (Authentification Device) und das Mobilfunknetz validiert wurde, also eine Authentifizierung über das Mobilfunknetz abgewickelt wurde, ist eine einfache Überprüfung des Passworts (OTP) seitens der Datenendeinrichtung (Company UA) ausreichend.

Der Zugriff ist in Fig. 4 durch die mit 4-12 und 4-13 gekennzeichneten Pfeile symbolisch dargestellt und erfolgt über die Datenendeinrichtung (VPN Server/AAA) des Unternehmens (Company). Der erfolgende Zugriff des Nutzers (Remote User) auf die Daten und/oder Dienste (Company resources) wird seitens der Datenendeinrichtung (Company UA) entsprechend protokolliert.

In einer weiteren Ausgestaltung der Erfindung wird zur Steigerung der Sicherheit eine entsprechende Zugriffsinformation dem Nutzer (Remote User) seitens seines mobilen Endgerätes (Authentication device) über entsprechende Kommunikationsverbindungen 4-5, 4-6 und 4-7 angezeigt.

In einer weiteren Ausgestaltung kann ferner die Anzeige der entsprechenden Authentifizierung eines Zugriffs seitens des mobilen Endgerätes (Authentication device) über entsprechende Verbindung 4-8, 4-9 und 4-10 seitens der Datenendeinrichtung (Company UA) erfasst und protokolliert werden.

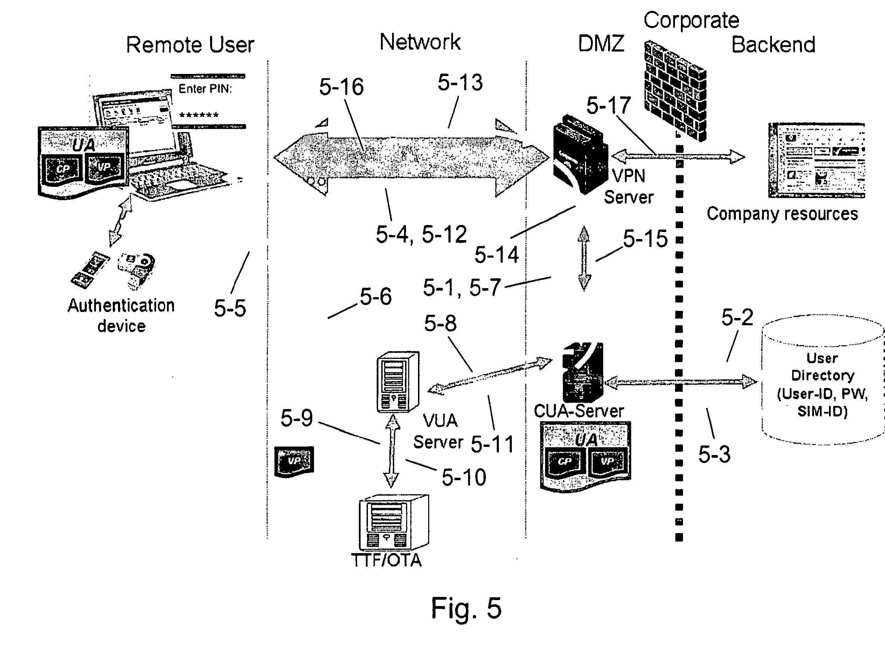

Bei dem in Fig. 5 dargestellten Ausführungsbeispiel einer Authentifikation eines Nutzers (Remote User) überträgt die von dem Nutzer (Remote User) genutzte Datenendeinrichtung, vorliegend ein Notebook, zunächst eine gerätespezifische Kennung über das verbindungsorientierte Rechnernetzwerk an eine zur Authentisierung seitens des Unternehmens (Corporate) vorgesehene Datenendeinrichtung (CUA-Server), wie in Fig. 5 anhand des mit 5-1 dargestellten Pfeils symbolisch dargestellt.

Die Datenendeinrichtung (CUA-Server) greift daraufhin über die in Fig. 5 mit 5-2 symbolisch dargestellte Verbindung auf eine Datenbank (User Directory (User-ID, PW, SIM-ID)) des Unternehmens (Corporate) zu und holt sich aus der Datenbank (User Directory) eine zu der übertragenden Kennung (5-1) des Nutzers (Remote User) erfassten Schlüssel, welcher über die in Fig. 5 mit 5-3 gekennzeichnete Verbindung an die Datenendeinrichtung (CUA-Server), übertragen wird.

Die Datenendeinrichtung (CUA-Server) überträgt die so erhaltenen Schlüssel über die in Fig. 5 mit 5-4 symbolisch dargestellte Verbindung über das verbindungsorientierte Rechnernetz (Network) an die Datenendeinrichtung des Nutzers (Remote User). Seitens der Datenendeinrichtung des Nutzers (Remote User) und der Datenendeinrichtung (CUA-Server) des Unternehmens (Corporate) wird daraufhin unter Nutzung des Schlüssels eine Identität des Nutzers (Remote User) durch Kombination der Kennung des Nutzers (Remote User) im verbindungsorientierten Rechnernetz und einer Kennung des Nutzers (Remote User) beziehungsweise dessen mobilen Endgerätes (Authentication device) im Mobilfunknetz bestimmt. Dazu wird über eine Verbindung zwischen der Datenendeinrichtung des Nutzers (Remote User) und dem im Mobilfunknetz betreibbaren mobilen Endgerät (Authentication device) des Nutzers im Mobilfunknetz der aus der Datenbank aus der die Fig. 5 mit 5-3 und 5-4 erhaltene Schlüssel an eine Datenendeinrichtung (TTF/OTA) des Mobilfunknetzes übertragen wie in Fig. 5 anhand des mit 5-5 gekennzeichneten Pfeils symbolisch dargestellt. Das im Mobilfunknetz betreibbare mobile Endgerät (Authentication device) des Nutzers ist dabei in einer bevorzugten Ausgestaltung der Erfindung ein sogenanntes Dongle und/oder eine PCMCIA-Karte.

Im Rahmen der Übertragung des Schlüssels über die in Fig. 5 mit 5-5 gekennzeichnete Verbindung gibt der Nutzer (Remote User) über die Datenendeinrichtung eine PIN ein, welche die Übertragung der 5-5 auslöst beziehungsweise diese und/oder den Schlüssel seitens der Datenendeinrichtung (TTF/OTA) des Mobilfunknetzes mit überträgt.

Bei entsprechend richtiger Eingabe der PIN wird seitens der Datenendeinrichtung (TTF/OTA) über die in Fig. 5 mit 5-6 gekennzeichnete Verbindung eine entsprechende Kennung des Nutzers (Remote User) im Mobilfunknetz an die Datenendeinrichtung des Nutzers (Remote User) übertragen, vorliegend über das im Mobilfunknetz betreibbare mobile Endgerät (Authentication Device) des Nutzers (Remote User). Damit liegt seitens des Nutzers (Remote User) die durch Kombination erzeugte beziehungsweise erzeugbare Identität des Nutzers (Remote User) vor, welche sich aus einer Kennung (CP) des Nutzers (Remote User) im Unternehmen (Coporate) und einer Kennung (VP) des Nutzers (Remote User) im Mobilfunknetz zusammensetzt beziehungsweise aus dieser bildbar ist.

Über die in Fig. 5 mit 5-7 gekennzeichnete Verbindung wird die entsprechend von der Datenendeinrichtung (TTF/OTA) des Mobilfunknetzes im Rahmen der Verbindung 5-6 übertragende Kennung über das verbindungsorientierte Rechnernetz (Network) von der Datenendeinrichtung des Nutzers (Remote User) an die Datenendeinrichtung (VUA-Server) des Unternehmens (Corporate) übermittelt und die so erhaltene Kennung über die in Fig. 5 mit 5-7 gekennzeichnete Verbindung an eine zur Authentifizierung vorgesehene Datenendeinrichtung (CUA-Server) des Mobilfunknetzes übertragen.

Die Datenendeinrichtung (CUA-Server) des Mobilfunknetzes fragt daraufhin bei einer weiteren Datenendeinrichtung (TTF/OTA) des Mobilfunknetzes im Rahmen der in Fig. 5 mit 5-9 gekennzeichneten Anfrage nach, ob es sich bei der im Rahmen der mit 5-7 gekennzeichneten Verbindung erhaltenen Kennung um eine gültige Kennung des Mobilfunknetzes beziehungsweise des Mobilfunknetzbetreibers handelt.

Die Datenendeinrichtung (TTF/OTA) übermittelt das Ergebnis der Anfrage (5-9) über die in Fig. 5 mit 5-10 gekennzeichnete Verbindung an die Datenendeinrichtung (VUA-Server) und über die in Fig. 5 mit 5-11 gekennzeichnete Verbindung weiter an die Datenendeinrichtung (CUA-Server) des Unternehmens (Corporate).

Daraufhin liegt entsprechend seitens der Datenendeinrichtung (CUA-Server) des Unternehmens (Corporate) entsprechend die aus der Kennung (CP) des Nutzers (Remote User) im Rechnernetz als auch die Kennung (VP) des Nutzers (Remote User) im Mobilfunknetz vor. Eine entsprechende Bestätigung der Gültigkeit der von dem Nutzer (Remote User) übertragenen (5-7) kann bei entsprechender Ausgestaltung von der Datenendeinrichtung CUA-Server über das Rechnernetz (Network) an die Datenendeinrichtung (Remote User) übertragen und entsprechend angezeigt werden (5-12).

Die seitens der Datenendeinrichtung (CUA-Server) vorliegende, aus der Kennung (CP) im Rechnernetz und der Kennung (VP) im Mobilfunknetz erzeugte beziehungsweise erzeugbare Identität wird anschließend für den Zugriff des Nutzers (Remote User) auf Daten und/oder Dienste (Company resources) des Unternehmens (Corporate) genutzt. Dazu überträgt der Nutzer (Remote User) seine kombinierte Identität (UA) über die in Fig. 5 mit 5-13 gekennzeichnete Verbindung über das verbindungsorientierte Rechnernetz (Network) an eine den Zugriff auf die Daten und/oder Dienste (Company resources) ermöglichende Datenendeinrichtung (VPN-Server) des Unternehmens (Corporate).

Die Datenendeinrichtung (VPN-Server) überträgt die von dem Nutzer (Remote User) über die Verbindung (5-13) erhaltende Identität (UA) über die in Fig. 5 mit 5-14 gekennzeichnete Verbindung an die die Identität (UA) aufweisende Datenendeinrichtung (CUA-Server) des Unternehmens (Corporate). Seitens der Datenendeinrichtung (CUA-Server) des Unternehmens (Corporate) wird daraufhin eine Überprüfung der über die Verbindung 5-13 und 5-14 übermittelten Identität mit der seitens der Datenendeinrichtung (CUA-Server) vorliegenden Identität (UA) mittels wenigstens eines Vergleichs vorgenommen.

Bei Übereinstimmung der Identitäten wird von der Datenendeinrichtung (CUA-Server) an die Datenendeinrichtung (VPN-Server) über die in Fig. 5 mit 5-15 gekennzeichnete Verbindung der Zugriff des Nutzers (Remote User) seitens der Datenendeinrichtung (VPN-Server) freigegeben.

Der Nutzer (Remote User) erhält daraufhin über die in Fig. 5 mit 5-16 und 5-17 gekennzeichneten Pfeile über die Datenendeinrichtung (VPN-Server) des Unternehmens (Corporate) Zugriff auf die Daten und/oder Dienste (Company resources) des Unternehmens.

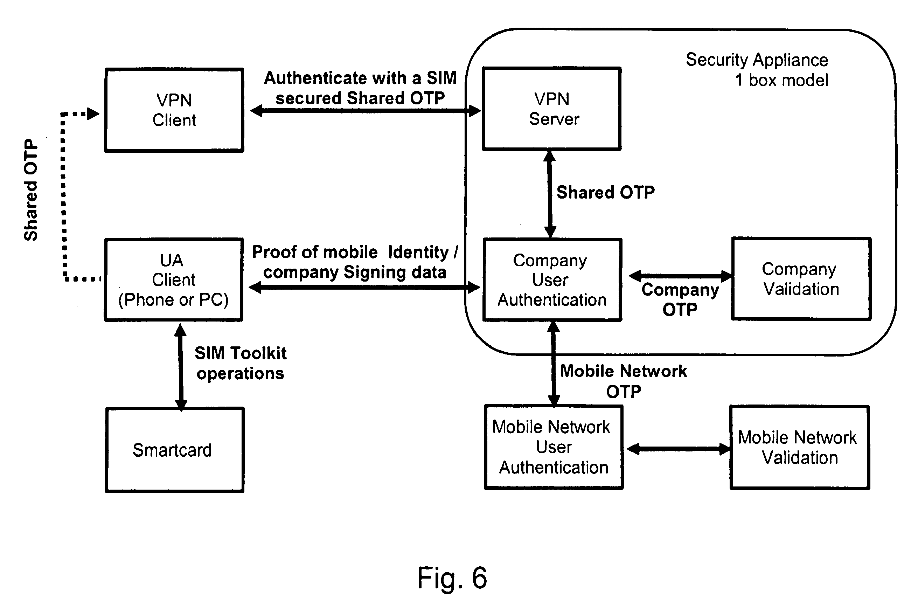

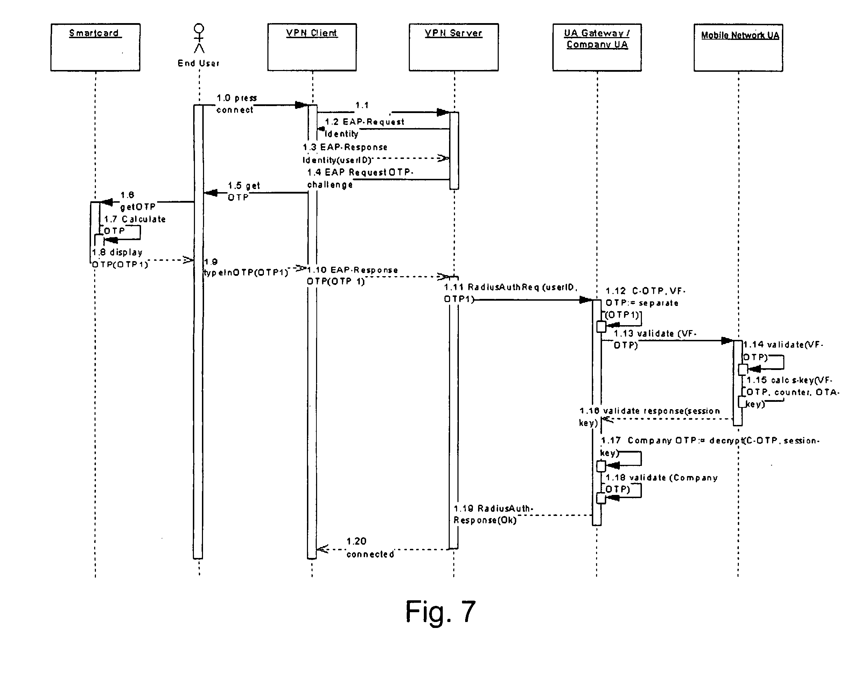

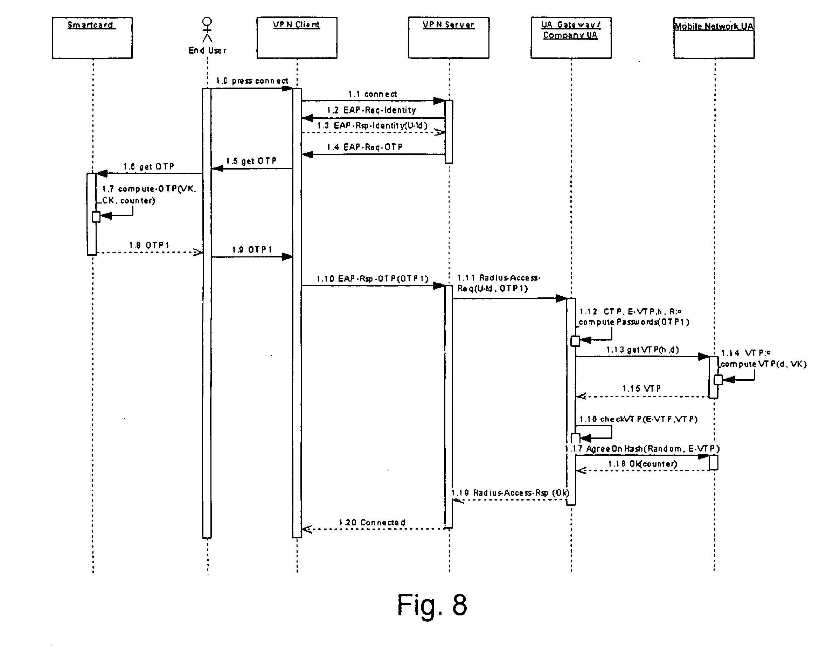

Das Blockdiagramm gemäß Fig. 6 zeigt die im Rahmen einer Authentifikation eines Klienten (VPN Client) beteiligten Systeme beziehungsweise Einrichtungen und die zwischen diesen gegebenen Kommunikationsanfragen und/oder - antworten (Challenge Response Communication). Details zu den einzelnen Komponenten sowie den zwischen diesen gegebenen Kommunikationsabläufen werden nachfolgend im Zusammenhang mit den in Fig. 7 und Fig. 8 dargestellten Ausführungsbeispielen näher erläutert, insbesondere hinsichtlich der Erzeugung und Nutzung der Identität eines Klienten (OTP) durch kombinative Nutzung einer Kennung des Klienten in dem Rechnernetz (Company OTP) mit einer Kennung des Klienten in dem Mobilfunknetz (Mobile Network OTP). Wie anhand der Darstellung gemäß Fig. 6 erkennbar, sind erfindungsgemäß vorteilhafterweise unterschiedliche Authentisierungsysteme aggregiert nutzbar, die je nach Anwendungsfall vorteilhafterweise miteinander kombiniert werden. In bevorzugten Ausgestaltungen der Erfindung sind die Validation Server OTP-basiert, vorteilhafterweise unter Nutzung von RSA und/oder SecurelD, Mobile-Signaturebasiert und/oder TTF-basiert.

Das in Fig. 7 schematisch dargestellte Ablaufdiagramm zeigt ein prinzipielles Ausführungsbeispiel einer Autorisierung eines Zugriffs auf Daten und/oder Dienste einer Datenendeinrichtung in einem virtuellen privaten Netzwerk und die dabei in beziehungsweise zwischen den verschiedenen Einrichtungen eines ein verbindungsorientiertes Rechnernetz und ein zellulares Mobilfunknetz aufweisenden Kommunikationssystems.

Der Nutzer (Enduser) eines Endgerätes initiiert in dem mit 1.0 gekennzeichneten Verfahrens- beziehungsweise Ablaufsschritt den Aufbau einer Verbindung zu einem sogenannten VPN-Client. Dazu drückt der Nutzer (Enduser) seitens seiner den VPN-Client bereitstellenden Datenendeinrichtung beispielsweise eine Taste zum Aufbau der Verbindung.

Die Datenendeinrichtung (VPN-Client) des Nutzers (Enduser) baut daraufhin eine Verbindung zu einer Datenendeinrichtung (VPN-Server) seitens des Unternehmens (Company) auf, wie in Fig. 7 anhand des mit 1.1 gekennzeichneten Pfeils symbolisch dargestellt.

Der VPN-Server fordert daraufhin in den mit 1.2 gekennzeichneten Verfahrensbeziehungsweise Ablaufschritt die Identität des Nutzers (Enduser) seitens des VPN-Clients des Nutzers (Enduser) an.

Der VPN- Client des Nutzers (Enduser) sendet daraufhin die Identität des Nutzers (Enduser) an den VPN-Server seitens des Unternehmens (Company), wobei über die in Fig. 7 mit 1.3 gekennzeichnete Antwort (EAP-Response) die Identität des Nutzers (Enduser) übertragen wird, vorliegend in Form einer sogenannten User-ID.

Anschließend wird von dem VPN-Server in dem in Fig. 7 mit 1.4 gekennzeichneten Verfahrens- beziehungsweise Ablaufschritt seitens des VPN-Client des Nutzers (Enduser) die Eingabe eines zur der Identität gehörenden Passwortes angefordert (EAP-REQ.OTP).

Der VPN-Client des Nutzers (Enduser) fordert daraufhin in dem mit 1.5 gekennzeichneten Verfahrens- beziehungsweise Ablaufschritt den Nutzer zur Eingabe des der Identität zugeordneten Passwortes (OTP) auf. Der Nutzer (Enduser) nutzt zur Bestimmung des Passwortes (OTP) sein im Mobilfunknetz betreibbares mobiles Endgerät beziehungsweise die von diesem genutzte Smartcard, vorliegend in Form der SIM-Karte des mobilen Endgerätes.

Die Bestimmung des Passwortes (OTP) mittels der Smartcard des mobilen Endgerätes des Nutzers (Enduser) ist in Fig. 7 durch den mit 1.6 gekennzeichneten Verfahrens- beziehungsweise Ablaufschritt symbolisch dargestellt.

Die Smartcard des Nutzers (Enduser) bestimmt beziehungsweise berechnet (Verfahrensschritt 1.7) daraufhin unter Nutzung einer Kennung des Nutzers in dem Netzwerk des Unternehmens und einer Kennung des Nutzers in dem Mobilfunknetz seitens der Smartcard die Identität unter Nutzung einer Zähleinrichtung.

Die von der Smartcard berechnete Identität beziehungsweise Passwort (OTP, OTP1), besteht aus einer Kombination einer Kennung des Nutzers im Rechnernetz des Unternehmens (CTP) und einer Kennung des Nutzers in dem Mobilfunknetz (VTP). In Fig. 7 wird durch die Ziffer "1" nach dem Passwort (OTP) ausgedrückt, dass jeder Zugriff als Instanz des OTP neu ist und dementsprechend nummeriert wird, vorzugsweise fortlaufend, so dass der nächste Zugriff als Instanz das Passwort OTP2, OTP3 und so weiter erhält. Das Passwort beziehungsweise die Identität wird anschließend als Kennung des Nutzers im Mobilfunknetz seitens einer Anzeigeeinrichtung des die Smartcard nutzenden mobilen Endgerätes des Nutzers (Enduser) angezeigt, wie in Fig. 7 anhand des mit 1.8 gekennzeichneten Verfahrensschrittes dargestellt.

Das seitens der Anzeigeeinrichtung des die Smartcard nutzenden mobilen Endgerätes des Nutzers wiedergegebene, die Kennung des Nutzers im Mobilfunknetz wiedergebende Passwort (OTP1) wird von dem Nutzer seitens des VPN-Clients des Nutzers eingegeben (Verfahrens- beziehungsweise Ablaufschritt 1.9) und von dem VPN-Client anschließend über das verbindungsorientierte Rechnernetz (Internet) an den VPN-Server des Unternehmens übertragen (Verfahrens- beziehungsweise Ablaufschritt 1.10).

In dem mit 1.11 gekennzeichneten Verfahrens- beziehungsweise Ablaufschritt initiiert VPN-Server seitens des virtuellen privaten Netzwerks des Unternehmens über eine zur Authentifizierung ausgebildete Übergangseinheit des Unternehmens (UA Gateway/Company UA) die Überprüfung der in Verfahrens- beziehungsweise Ablaufschritt 1.11 erhaltenden Nutzerkennung (User-ID) mit der entsprechend übertragenden Kennung des Nutzers (Enduser) im Mobilfunknetz (OTP1). Dabei wird seitens der Übergangseinheit des Unternehmens (UA Gateway/Company UA) in dem mit 1.12 gekennzeichneten Verfahrens- beziehungsweise Ablaufschritt entschlüsselt und in eine Kennung des Nutzers im Unternehmensnetz und eine Kennung des Nutzers im Mobilfunknetz zerlegt.

In dem mit 1.13 gekennzeichneten Verfahrens- beziehungsweise Ablaufschritt überprüft die Übergangseinheit des Unternehmens (UA Gateway/Company UA) durch entsprechende Anfrage seitens des Mobilfunknetzwerks (Mobile Network UA) die Gültigkeit der entsprechend mit der verschlüsselten Identität OTP1 kombiniert übertragenden Kennung des Nutzers im Mobilfunknetz (VF-OTP). Dazu wird die Kennung des Klienten im Mobilfunknetz (VF-OTP) im Verfahrensschritt 1.13 an das Mobilfunknetz (Mobile Network UA) übertragen und im Verfahrensschritt 1.14 seitens des Mobilfunknetzes überprüft. Dabei wird im Verfahrensschrift 1.15 seitens des Mobilfunknetzes berechnet oder sonst wie überprüft, ob die im Verfahrensschritt 1.13 übertragene Kennung gültig ist.

In dem mit 1.16 gekennzeichneten Verfahrensschritt sendet das Mobilfunknetz an die Übergangseinheit des Unternehmens eine entsprechende Validierungsinformation bezüglich der Kennung des Nutzers im Mobilfunknetz zurück.

Bei positiver Validierung der Kennung des Nutzers im Mobilfunknetz wird anschließend seitens der Übergangseinheit des Unternehmens in dem mit 1.17 gekennzeichneten Verfahrensschritt die mit der Identität (OTP1) übertragene Kennung des Nutzers im Unternehmensnetz (Company OTP) entschlüsselt.

Die entschlüsselte Kennung des Nutzers im Netzwerk des Unternehmens (Company OTP) wird anschließend in dem mit 1.18 gekennzeichneten Verfahrens- beziehungsweise Ablaufschritt seitens der Übergangseinheit des Unternehmens (UA Gateway/Company UA) validiert.

Bei positiver Validierung sendet die Übergangseinheit des Unternehmens (UA Gateway/Company UA) in dem mit 1.19 gekennzeichneten Verfahrensschritt eine entsprechende Authentifizierungsinformation an den VPN-Server des Unternehmens woraufhin der VPN-Client in dem mit 1.20 gekennzeichneten Verfahrenschritt beziehungsweise Ablaufschritt mit dem VPN-Server verbunden wird. Der so mit dem VPN-Server verbundene VPN-Client kann daraufhin auf das Unternehmensnetz und die im Unternehmensnetz bereitgestellten Daten- und/oder Dienste zugreifen.

Das in Fig. 8 schematisch dargestellte Ablaufdiagramm unterscheidet sich von dem in Fig. 7 dargestellten Ablaufdiagramm einer Autorisierung eines Zugriffs eines Nutzers auf Daten und/oder Dienste in einem Unternehmensnetz hinsichtlich der Erzeugung der Identität aus einer Kennung des Nutzers (Enduser) im Rechnernetz eines Unternehmens und der Kennung des Nutzers (Enduser) im Mobilfunknetz. Unterschiede sind dabei insbesondere in den Verfahrensschritten 1.14 bis 1.18 gegeben.

Bei dem in Fig. 8 dargestellten Ausführungsbeispiel wird dabei aus der Kennung des Nutzers im Mobilfunknetz auf vereinfachte Art und Weise eine Gültigkeit derselben durch Abfrage im Mobilfunknetz (Mobile Network UA) vorgenommen, wobei aus der Kennung des Nutzers im Mobilfunknetz ein Gültigkeitswert in dem mit 1.14 gekennzeichneten Verfahrenschritt seitens des Mobilfunknetzes berechnet und in dem mit 1.15 gekennzeichneten Verfahrens- beziehungsweise Ablaufschritt der Übergangseinheit (UA Gateway/Company UA) übertragen wird. Mit Übertragung dieses Wertes wird seitens der Übergangseinheit des Unternehmens anschließend eine Überprüfung des von dem Mobilfunknetz im Verfahrensschritt 1.15 übertragenen Wertes mit einem seitens der Übergangseinheit erfassten Wert für den entsprechenden Zugriff vorgenommen, wie in Fig. 8 in dem mit 1.16 gekennzeichneten Verfahrensschritt dargestellt. Bei entsprechender Übereinstimmung wird daraufhin in dem mit 1.17 gekennzeichneten Verfahrensschritt ein entsprechender Zufallswert von der Übergangseinheit an das Mobilfunknetz übertragen und entsprechend ein Zähler des Mobilfunknetzes initiiert. Der entsprechende Zählerstand der Zähleinrichtung im Mobilfunknetz wird daraufhin über die in Fig. 8 mit 1.18 gekennzeichnete Verbindung an die Übergangseinheit (UA Gateway/Company UA) übertragen. Mit der Übertragung des entsprechenden Zählerstandes liegt daraufhin seitens der Übergangseinheit ein validiertes Ergebnis für die Überprüfung der Identität vor und die Verbindung zwischen dem VPN-Client des Nutzers (Enduser) und dem VPN-Server des Unternehmens wird entsprechend den im Zusammenhang mit Fig. 7 beschriebenen Verfahrens- beziehungsweise Ablaufschritten 1.19 und 1.20 aufgebaut.

Die in den Figuren der Zeichnung dargestellten Ausführungsbeispiele dienen lediglich der Erläuterung der Erfindung und sind für diese nicht beschränkend.

## Patentansprüche

1. Verfahren zur Erzeugung einer Identität von Klienten in einem ein verbindungsorientiertes Rechnernetz und ein zellulares Mobilfunknetz aufweisenden Kommunikationssystem,
wobei die Identität eines Klienten durch Kombination einer Kennung der Klienten in dem Rechnernetz mit einer Kennung des Klienten in dem Mobilfunknetz erzeugt wird, wobei im Rahmen der Kombination die Kennung des Klienten in dem Rechnernetz mit der Kennung des Klienten in dem Mobilfunknetz verschlüsselt wird.

2. Verfahren nach Anspruch 1, **dadurch gekennzeichnet, dass** die Kennung des Klienten in dem Rechnernetz mit einem kryptographischen Algorithmus erzeugt wird, vorzugsweise seitens einer Datenendeinrichtung des Rechnernetzes.

3. Verfahren nach Anspruch 1 oder Anspruch 2, **dadurch gekennzeichnet, dass** die Kennung des Klienten in dem Rechnernetz unter Nutzung einer Basiskennung des Klienten im Rechnernetz und einer Zähleinrichtung erzeugt wird.

4. Verfahren nach Anspruch 3, **dadurch gekennzeichnet, dass** die Zähleinrichtung einen kryptographischen Algorithmus nutzend ausgebildet ist.

5. Verfahren nach Anspruch 3 oder Anspruch 4, **dadurch gekennzeichnet, dass** die Zähleinrichtung Bestandteil der Datenendeinrichtung ist.

6. Verfahren nach einem der Ansprüche 1 bis 5, **dadurch gekennzeichnet, dass** die Kennung des Klienten in dem Mobilfunknetz mit einem kryptographischen Algorithmus erzeugt wird.

7. Verfahren nach Anspruch 6, **dadurch gekennzeichnet, dass** die Kennung seitens eines in dem Mobilfunknetz betreibbaren mobilen Endgerätes des Klienten erzeugt wird.

8. Verfahren nach einem der Ansprüche 1 bis 7, **dadurch gekennzeichnet, dass** die Kennung des Klienten in dem Mobilfunknetz unter Nutzung einer Basiskennung des Klienten im Mobilfunknetz und einer Zähleinrichtung erzeugt wird.

9. Verfahren nach Anspruch 8, **dadurch gekennzeichnet, dass** die Zähleinrichtung einen kryptographischen Algorithmus nutzend ausgebildet ist.

10. Verfahren nach Anspruch 8 oder Anspruch 9, **dadurch gekennzeichnet, dass** die Zähleinrichtung Bestandteil des mobilen Endgerätes und/oder eines von dem mobilen Endgerät genutzten Mobilfunkteilnehmer-Identifikations-Moduls, SIM, ist.

11. Verfahren nach einem der Ansprüche 1 bis 10, **dadurch gekennzeichnet, dass** die Kennungen unabhängig voneinander erzeugt werden.

12. Verfahren nach einem der Ansprüche 1 bis 11, **dadurch gekennzeichnet, dass** die Kennung des Klienten in dem Rechnernetz mit einem aus der Kennung der Klienten in dem Mobilfunknetz bestimmbaren Schlüssel verschlüsselt wird.

13. Verfahren nach Anspruch 12, **dadurch gekennzeichnet, dass** der Schlüssel ein symmetrischer Schlüssel ist.

14. Verfahren nach einem der Ansprüche 1 bis 13, **dadurch gekennzeichnet, dass** die Kennung des Klienten in dem Rechnernetz mit einem aus der Kennung ces Klienten in dem Mobilfunknetz und dem Zählerstand einer synchroniserten Zähleinrichtung des Mobilfunknetzes bestimmbaren Schlüssel verschlüsseln wird.

15. Verfahren nach Anspruch 14, **dadurch gekennzeichnet, dass** der Schlüssel ein symmetrischer Schlüssel ist.

16. Verfahren nach einem der Ansprüche 1 bis 14, **dadurch gekennzeichnet, dass** der Klient ein Prozess und/oder ein Benutzer einer Datenendeinrichtung in dem Rechnernetz und/oder ein Prozess und/oder ein Benutzer eines in dem Mobilfunknetz betreibbaren mobilen Endgerätes ist.

17. Verfahren nach einem der Ansprüche 1 bis 16, **dadurch gekennzeichnet, dass** die Identität zur Authentisierung eines Klienten genutzt wird.

18. Verfahren nach Anspruch 17, **dadurch gekennzeichnet, dass** die Identität von einer Datenendeinrichtung des Rechnernetzes über eine Kommunikationsverbindung des Rechnernetzes von dem Klienten angefordert und von dem Klienten über die Kommunikationsverbindung an die Datenendeinrichtung des Rechnernetzes übertragen wird.

19. Verfahren nach Anspruch 17 oder Anspruch 18, **dadurch gekennzeichnet, dass** die Kennung des Klienten im Mobilfunknetz von einer Datenendeinrichtung des Rechnernetzes über eine Kommunikationsverbindung des Rechnernetzes von dem Klienten angefordert: wird.

20. Verfahren nach Anspruch 19, **dadurch gekennzeichnet, dass** die Anforderung nach der Kennung des Klienten im Mobilfunknetz über eine Kommunikationsverbindung des Mobilfunknetzes an ein in dem Mobilfunknetz betreibbares mobiles Endgerät des Klienten gerichtet, seitens des mobilen Endgerätes des Klienten die Kennung des Klienten in dem Mobilfunknetz erzeugt, und die erzeugte Kennung des Klienten in dem Mobilfunknetz von dem mobilen Endgerät des Klienten über eine und/oder unter Nutzung einer Kommunikationsverbindung des Mobilfunknetzes an die Datenendeinrichtung des Rechnernetzes übertragen wird.

21. Verfahren nach Anspruch 20, **dadurch gekennzeichnet, dass** die Kommunikationsverbindung des Mobilfunknetzes eine eine Verbindung in das Rechnernetz ermöglichende Kommunikationsverbindung ist.

22. Verfahren nach Anspruch 21, **gekennzeichnet durch** eine Protokolle gemäß der WAP-Spezifikation nutzende Kommunikationsverbindung.

23. Verfahren nach einem der Ansprüche 19 bis 22, **dadurch gekennzeichnet, dass** seitens der Datenendeinrichtung des Rechnernetzes die Kennung des Klienten im Rechnernetz erzeugt und zur Erzeugung der Identität des Klienten mit der Kennung des Klienten im Mobilfunknetz verschlüsselt wird.

24. Verfahren nach einem der Ansprüche 1 bis 23, **dadurch gekennzeichnet, dass** die Identität zur Authentifizierung eines Klienten genutzt wird.

25. Verfahren nach Anspruch 24, **dadurch gekennzeichnet, dass** die Authentifizierung seitens einer Datenendeinrichtung des Rechnernetzes erfolgt.

26. Verfahren nach Anspruch 24 oder Anspruch 25, **dadurch gekennzeichnet, dass** im Rahmen der Authentifizierung eine Zerlegung der Identität in die Kennung des Klienten im Rechnernetz und in die Kennung des Klienten im Mobilfunknetz erfolgt.

27. Verfahren nach einem der Ansprüche 24 bis 26, **dadurch gekennzeichnet, dass** die im Rahmen der Zerlegung der Identität bestimmte Kennung des Klienten im Rechnernetz authentifiziert wird.

28. Verfahren nach Anspruch 27, **dadurch gekennzeichnet, dass** die Authentifizierung durch wenigstens einen Vergleich seitens einer Datenendeinrichtung des Rechnernetzes erfolgt.

29. Verfahren nach einem der Ansprüche 1 bis 28, **dadurch gekennzeichnet, dass** dieses zur Autorisierung eines Zugriffs eines Datenendgerätes auf Daten und/oder Dienste einer Datenendeinrichtung in einem Rechnernetz genutzt wird.

30. Kommunikationssystem bestehend aus einem verbindungsorientierten Rechnernetz mit Datenendeinrichtungen und einem zellularen Mobilfunknetz mit darin betreibbaren mobilen Endgeräten,
**dadurch gekennzeichnet,**
**dass** die Datenendeinrichtungen, die Einrichtungen des Mobilfunknetzes und/oder die mobilen Endgeräte zur Ausführung und/oder Nutzung eines Verfahrens nach einem der Ansprüche 1 bis 29 ausgebildet sind.

31. Mobiles Endgerät zur Nutzung in einem zellularen Mobilfunknetz mit einem Mobilfunkteilnehmer-Identifikations-Modul, SIM,
**dadurch gekennzeichnet,**
**dass** dieses zur Ausführung eines Verfahrens nach einem der Ansprüche 1 bis 29 ausgebindet ist, vorzugsweise in einem Kommunikationssystem nach Anspruch 30.

32. Mobilfunkteilnehmer-Identifikations-Modul, SIM, zur Nutzung mit einem mobilen Endgerät zum Betrieb in einem zellularen Mobilfunknetz,
**dadurch gekennzeichnet,**
**dass** dieses zur Ausführung eines Verfahrens nach einem der Ansprüche 1 bis 29 ausgebildet ist, vorzugsweise in einem Kommunikationssystem nach Anspruch 30.

33. Mobilfunkteilnehmer-Identifikations-Modul, SIM, nach Anspruch 32, **dadurch gekennzeichnet, dass** das Verfahren als Anwendungsprogramm seitens des SIM gespeichert und/oder ausführbar ist.

## Claims

1. A method for generating an identity of clients in a communication system comprising a connection oriented computer network and a cellular mobile radio network,
wherein the identity of a client is generated by combining an identification of the client in the computer network with an identification of the client in the mobile radio network, wherein within the scope of the combination the identification of the client in the computer network is encoded with the identification of the client in the mobile radio network.

2. A method according to claim 1, **characterized in that** the identification of the client in the computer network is generated by means of a cryptographic algorithm, preferably by means of a data terminal equipment of the computer network.

3. A method according to claim 1 or claim 2, **characterized in that** the identification of the client in the computer network is generated using a base identification of the client in the computer network and a counting device.

4. A method according to claim 3, **characterized in that** the counting device is designed for using a cryptographic algorithm.

5. A method according to claim 3 or claim 4, **characterized in that** the counting device is part of the data terminal equipment.

6. A method according to one of the claims 1 through 5, **characterized in that** the identification of the client in the mobile radio network is generated by means of a cryptographic algorithm.

7. A method according to claim 6, **characterized in that** the identification is generated by a mobile terminal of the client which can be operated in the mobile radio network.

8. A method according to one of the claims 1 through 7, **characterized in that** the identification of the client in the mobile radio network is generated using a base identification of the client in the mobile radio network and a counting device.

9. A method according to claim 8, **characterized in that** the counting device is designed for using a cryptographic algorithm.

10. A method according to claim 8 or claim 9, **characterized in that** the counting device is part of the mobile terminal and/or a subscriber identification module SIM which is used by the mobile terminal.

11. A method according to one of the claims 1 through 10, **characterized in that** the identifications are generated independently from each other.

12. A method according to one of the claims 1 through 11, **characterized in that** the identification of the client in the computer network is encoded by means of a code which can be determined from the identification of the client in the mobile radio network.

13. A method according to claim 12, **characterized in that** the code is a symmetric code.

14. A method according to one of the claims 1 through 13, **characterized in that** the identification of the client in the computer network is encoded by means of a code which can be determined from the identification of the client in the mobile radio network and the count of a synchronized counting device of the mobile radio network.

15. A method according to claim 14, **characterized in that** the code is a symmetric code.

16. A method according to one of the claims 1 through 14, **characterized in that** the client is a process and/or a user of a data terminal equipment in the computer network and/or a process and/or a user of a mobile terminal which can be operated in the mobile radio network.

17. A method according to one of the claims 1 through 16, **characterized in that** the identity is used for the authentication of a client.

18. A method according to claim 17, **characterized in that** the identity is requested by the client from a data terminal equipment of the computer network via a communication connection of the computer network and is transmitted by the client via the communication connection to the data terminal equipment of the computer network.

19. A method according to claim 17 or claim 18, **characterized in that** the identification of the client in the mobile radio network is requested by the client from a data terminal equipment of the computer network via a communication connection of the computer network.

20. A method according to claim 19, **characterized in that** the request for the identification of the client in the mobile radio network is directed via a communication connection of the mobile radio network to a mobile terminal of the client which can be operated in the mobile radio network, the identification of the client in the mobile radio network is generated by the mobile terminal of the client and the generated identification of the client in the mobile radio network is transmitted by the mobile terminal of the client via and/or using a communication connection of the mobile radio network to the data terminal equipment of the computer network.

21. A method according to claim 20, **characterized in that** the communication connection of the mobile radio network is a communication connection which enables a connection to the computer network.

22. A method according to claim 21, **characterized by** a communication connection which uses protocols according to the WAP specification.

23. A method according to one of the claims 19 through 22, **characterized in that** the identification of the client in the computer network is generated by means of the data terminal equipment of the computer network and is encoded with the identification of the client in the mobile radio network for generating the identity of the client.

24. A method according to one of the claims 1 through 23, **characterized in that** the identity is used for the authentication of a client.

25. A method according to claim 24, **characterized in that** the authentication is realized by means of a data terminal equipment of the computer network.

26. A method according to claim 24 or claim 25, **characterized in that** within the scope of the authentication, the identity is decomposed into the identification of the client in the computer network and into the identification of the client in the mobile radio network.

27. A methods according to one of the claims 24 through 26, **characterized in that** the identification of the client in the computer network, which has been determined within the scope of the decomposition of the identity, is authenticated.

28. A method according to claim 27, **characterized in that** the authentication is realized by at least one comparison by means of a data terminal equipment of the computer network.

29. A method according to one of the claims 1 through 28, **characterized in that** this one is used for authorizing an access of a data terminal to data and/or services of a data terminal equipment in a computer network.

30. A communication system composed of a connection oriented computer network comprising data terminal equipments and a cellular mobile radio network comprising mobile terminals which can be operated therein,
**characterized in that**
the data terminal equipments, the devices of the mobile radio network and/or the mobile terminals are designed for carrying out and/or using a method according to one of the claims 1 through 29.

31. A mobile terminal for the use in a cellular mobile radio network comprising a subscriber identification module SIM,
**characterized in that**
this one is designed for carrying out a method according to one of the claims 1 through 29, preferably in a communication system according to claim 30.

32. A subscriber identification module SIM for the use with a mobile terminal to be operated in a cellular mobile radio network,
**characterized in that**
this one is designed for carrying out a method according to one of the claims 1 through 29, preferably in a communication system according to claim 30.

33. A subscriber identification module SIM according to claim 32, **characterized in that** the method can be memorized and/or executed as application program by the SIM.

## Revendications

1. Procédé de génération d'une identité des clients dans un système de communication comprenant un réseau d'ordinateur orienté vers les liaisons et un réseau radio mobile cellulaire,
dans lequel l'identité d'un client est générée par la combinaison d'une identification du client dans le réseau d'ordinateur avec une identification du client dans le réseau radio mobile, et dans lequel dans le cadre de la combinaison l'identification du client dans le réseau d'ordinateur est codée avec l'identification du client dans le réseau radio mobile.

2. Procédé selon la revendication 1, **caractérisé en ce que** l'identification du client dans le réseau d'ordinateur est générée par un algorithme cryptographique, de préférence par moyen d'un terminal de données du réseau d'ordinateur.

3. Procédé selon la revendication 1 ou la revendication 2, **caractérisé en ce que** l'identification du client dans le réseau d'ordinateur est générée en utilisant une identification de base du client dans le réseau d'ordinateur et un compteur.

4. Procédé selon la revendication 3, **caractérisé en ce que** le compteur est adapté à utiliser un algorithme cryptographique.

5. Procédé selon la revendication 3 ou la revendication 4, **caractérisé en ce que** le compteur est une partie du terminal de données.

6. Procédé selon l'une des revendications 1 à 5, **caractérisé en ce que** l'identification du client dans le réseau radio mobile est générée par un algorithme cryptographique.

7. Procédé selon la revendication 6, **caractérisé en ce que** l'identification est générée par moyen d'un terminal mobile du client qui est opérable dans le réseau radio mobile.

8. Procédé selon l'une des revendications 1 à 7, **caractérisé en ce que** l'identification du client dans le réseau radio mobile est générée en utilisant une identification de base du client dans le réseau radio mobile et un compteur.

9. Procédé selon la revendication 8, **caractérisé en ce que** le compteur est adapté à utiliser un algorithme cryptographique.

10. Procédé selon la revendication 8 ou la revendication 9, **caractérisé en ce que** le compteur est une partie du terminal mobile et/ou d'un module d'identification d'abonné SIM utilisé par le terminal mobile.

11. Procédé selon l'une des revendications 1 à 10, **caractérisé en ce que** les identifications sont générées de manière indépendante l'une de l'autre.

12. Procédé selon l'une des revendications 1 à 11, **caractérisé en ce que** l'identification du client dans le réseau d'ordinateur est codée à l'aide d'un code qu'on peut déterminer à partir de l'identification du client dans le réseau radio mobile.

13. Procédé selon la revendication 12, **caractérisé en ce que** le code est un code symétrique.

14. Procédé selon l'une des revendications 1 à 13, **caractérisé en ce que** l'identification du client dans le réseau d'ordinateur est codée à l'aide d'un code qu'on peut déterminer à partir de l'identification du client dans le réseau radio mobile et de la position d'un compteur synchronisé du réseau radio mobile.

15. Procédé selon la revendication 14, **caractérisé en ce que** le code est un code symétrique.

16. Procédé selon l'une des revendications 1 à 14, **caractérisé en ce que** le client est un processus et/ou un utilisateur d'un terminal de données dans le réseau d'ordinateur et/ou un processus et/ou un utilisateur d'un terminal mobile opérable dans le réseau radio mobile.

17. Procédé selon l'une des revendications 1 à 16, **caractérisé en ce que** l'identité est utilisée pour l'authentification d'un client.

18. Procédé selon la revendication 17, **caractérisé en ce que** le client demande l'identité à un terminal de données du réseau d'ordinateur via une liaison de communication du réseau d'ordinateur et la transmet au terminal de données du réseau d'ordinateur via la liaison de communication.

19. Procédé selon la revendication 17 ou la revendication 18, **caractérisé en ce que** le client demande l'identification du client dans le réseau radio mobile à un terminal de données du réseau d'ordinateur via une liaison de communication du réseau d'ordinateur.

20. Procédé selon la revendication 19, **caractérisé en ce que** la demande de l'identification du client dans le réseau radio mobile est dirigée via une liaison de communication du réseau radio mobile à un terminal mobile du client lequel est opérable dans le réseau radio mobile, l'identification du client dans le réseau radio mobile est générée par le terminal mobile du client et l'identification générée du client dans le réseau radio mobile est transmise via et/ou en utilisant une liaison de communication du réseau radio mobile au terminal de données du réseau d'ordinateur.

21. Procédé selon la revendication 20, **caractérisé en ce que** la liaison de communication du réseau radio mobile est une liaison de communication qui permet d'établir une liaison au réseau d'ordinateur.

22. Procédé selon la revendication 21, **caractérisé par** une liaison de communication qui utilise des protocoles selon la spécification WAP.

23. Procédé selon l'une des revendications 19 à 22, **caractérisé en ce que** l'identification du client dans le réseau d'ordinateur est générée par le terminal de données du réseau d'ordinateur et est codée avec l'identification du client dans le réseau radio mobile pour générer l'identité du client.

24. Procédé selon l'une des revendications 1 à 23, **caractérisé en ce que** l'identité est utilisée pour l'authentification d'un client.

25. Procédé selon la revendication 24, **caractérisé en ce que** l'authentification se fait par moyen d'un terminal de données du réseau d'ordinateur.

26. Procédé selon la revendication 24 ou la revendication 25, **caractérisé en ce que** dans le cadre de l'authentification, l'identité est décomposée en l'identification du client dans le réseau d'ordinateur et en l'identification du client dans le réseau radio mobile.

27. Procédé selon l'une des revendications 24 à 26, **caractérisé en ce que** l'identification du client dans le réseau d'ordinateur déterminée dans le cadre de la décomposition de l'identité est authentifiée.

28. Procédé selon la revendication 27, **caractérisé en ce que** l'authentification se fait par au moins une comparaison par un terminal de données du réseau d'ordinateur.

29. Procédé selon l'une des revendications 1 à 28, **caractérisé en ce que** celui-ci est utilisé pour autoriser un accès d'un poste terminal aux données et/ou aux services d'un terminal de données dans un réseau d'ordinateur.

30. Système de communication composé d'un réseau d'ordinateur orienté vers les liaisons comprenant des terminaux de données et un réseau radio mobile cellulaire comprenant des terminaux mobiles opérables dans celui-ci,
**caractérisé en ce que**
les terminaux de données, les dispositifs du réseau radio mobile et/ou les terminaux mobiles sont adaptés à exécuter et/ou utiliser un procédé selon l'une des revendications 1 à 29.

31. Terminal mobile pour l'utilisation dans un réseau radio mobile cellulaire comprenant un module d'identification d'abonné SIM,
**caractérisé en ce que**
celui-ci est adapté à exécuter un procédé selon l'une des revendications 1 à 29, de préférence dans un système de communication selon la revendication 30.

32. Module d'identification d'abonné SIM pour l'utilisation avec un terminal mobile opérable dans un réseau radio mobile cellulaire,
**caractérisé en ce que**
celui-ci est adapté à exécuter un procédé selon l'une des revendications 1 à 29, de préférence dans un système de communication selon la revendication 30.

33. Module d'identification d'abonné SIM selon la revendication 32, **caractérisé en ce que** le procédé est mémorisé et/ou susceptible d'être exécuté par le SIM en tant que programme d'application.
